(19) Europäisches Patentamt
European Patent Office
Office européen des brevets

(11) **EP 4 270 770 B1**

(12) **EUROPEAN PATENT SPECIFICATION**

(45) Date of publication and mention
of the grant of the patent:
**10.09.2025 Bulletin 2025/37**

(21) Application number: **21915223.8**

(22) Date of filing: **24.12.2021**

(51) International Patent Classification (IPC):
*H02P 6/16* (2016.01)     *H02P 25/028* (2016.01)
*D04B 15/99* (2006.01)    *H02P 25/03* (2016.01)
*D04B 9/00* (2006.01)

(52) Cooperative Patent Classification (CPC):
**D04B 15/99; D04B 9/00; H02P 6/16; H02P 25/028;
H02P 25/03;** H02P 2203/03; H02P 2207/05

(86) International application number:
**PCT/JP2021/048188**

(87) International publication number:
**WO 2022/145363 (07.07.2022 Gazette 2022/27)**

(54) **POSITION ESTIMATION METHOD, POSITION ESTIMATION DEVICE, UNMANNED CARRIER, AND SEWING DEVICE**

POSITIONSSCHÄTZUNGSVERFAHREN, POSITIONSSCHÄTZUNGSVORRICHTUNG, UNBEMANNTER TRÄGER UND NÄHVORRICHTUNG

PROCÉDÉ ET DISPOSITIF D'ESTIMATION DE POSITION, TRANSPORTEUR SANS PILOTE, ET DISPOSITIF DE COUTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2020 JP 2020218644**

(43) Date of publication of application:
**01.11.2023 Bulletin 2023/44**

(73) Proprietors:
• **Nidec Instruments Corporation
Nagano 393-8511 (JP)**
• **Nidec Corporation
Minami-ku, Kyoto-shi,
Kyoto 601-8205 (JP)**

(72) Inventors:
• **SAITO, Yutaka
Suwa-gun, Nagano 393-8511 (JP)**
• **FUJITA, Atsushi
Kyoto-shi, Kyoto 601-8205 (JP)**
• **ISHIGAMI, Shota
Kyoto-shi, Kyoto 601-8205 (JP)**

(74) Representative: **Viering, Jentschura & Partner
mbB
Patent- und Rechtsanwälte
Grillparzerstraße 14
81675 München (DE)**

(56) References cited:
WO-A1-2020/090595     JP-B2- 6 233 532
US-A1- 2016 116 304     US-A1- 2020 232 822

EP 4 270 770 B1

## Description

TECHNICAL FIELD

The present invention relates to a position estimation method, a position estimation device, an unmanned transport vehicle, and a sewing device.

BACKGROUND ART

Conventionally, a configuration including an absolute angle position sensor such as an optical encoder and a resolver is known as a motor that can accurately control a rotor position. However, the absolute angle position sensor is large in size and high in cost. Therefore, Patent Literature 1 discloses a method of estimating a rotational position of a rotor of a motor without using an absolute angle position sensor.

US 2016/116304 A1 discloses detection of the absolute rotation angle of a rotor of a stepping motor including a rotor and a stator winding, a first magnetic sensor having a resolution of 200 steps per mechanical angle of 360 degrees detects the rotation angle of a rotor. An incremental encoder outputs a plurality of types of signals periodically in accordance with the rotation angle of the rotor. A rotation angle acquired in a controller acquires the absolute rotation angle of the rotor on the basis of the rotor rotation angle detected by the first magnetic sensor and the type of signal output by the incremental encoder.

US 2020/232822 A1 discloses a magnetic field sensor for sensing an absolute position of a target object including one or more magnetic field sensing elements disposed proximate to a mechanical intersection of first and second portions of a target object, wherein the one or more magnetic field sensing elements are operable to generate a first magnetic field signal responsive to the movement of both the first and second portions. The magnetic field sensor can also include a position detection module operable to use the first magnetic field signal to generate a position value indicative of the absolute position. The magnetic field sensor can also include an output format module coupled to receive the position value and to generate an output signal from the magnetic field sensor indicative of the absolute position.

CITATIONS LIST

PATENT LITERATURE

Patent Literature 1: JP 6233532 B2

SUMMARY OF INVENTION

TECHNICAL PROBLEMS

In the position estimation method described in Patent Literature 1, there is a case where an initial position of the rotational position of the rotor cannot be estimated in a range where the rotor angle is less than one rotation. Therefore, it has been difficult to apply the position estimation method to applications in which preliminary operation for rotating the rotor for estimation of the initial position is not allowed driving motors such as, for example, robots, unmanned transport vehicles, and sewing devices.

SOLUTIONS TO PROBLEMS

The present invention is defined in the independent claims 1 and 4.

ADVANTAGEOUS EFFECTS OF INVENTION

According to the above aspect of the present invention, there are provided a position estimation method, a position estimation device, an unmanned transport vehicle, and a sewing device that can eliminate the need for a preliminary rotation operation for estimation of a rotational position.

BRIEF DESCRIPTION OF DRAWINGS

FIG. 1 is a block diagram schematically illustrating a configuration of a position estimation device in a first embodiment of the present invention.

FIG. 2 is a flowchart illustrating learning processing executed by a processing unit in the first embodiment.

FIG. 3 is an explanatory diagram related to learning data acquired by learning processing in the first embodiment.

FIG. 4 is an enlarged view of incremental signals Hu, Hv, and Hw included in one pole pair region.

FIG. 5 is a flowchart illustrating position estimation processing executed by the processing unit in the first embodiment.

FIG. 6 is a view illustrating a modification of the position estimation device in the first embodiment.

FIG. 7 is a block diagram schematically illustrating a configuration of a position estimation device in a second embodiment of the present invention.

FIG. 8 is a flowchart illustrating learning processing executed by a processing unit in the second embodiment.

FIG. 9 is an explanatory diagram related to learning data acquired by learning processing in the second embodiment.

FIG. 10 is a flowchart illustrating position estimation processing executed by the processing unit in the second embodiment.

FIG. 11 is a block diagram schematically illustrating a configuration of a position estimation device in a third embodiment of the present invention.

FIG. 12 is a flowchart illustrating learning processing executed by a processing unit in the third embodiment.

FIG. 13 is an explanatory diagram related to learning data acquired by learning processing in the third embodiment.

FIG. 14 is a flowchart illustrating position estimation processing executed by the processing unit in the third embodiment.

FIG. 15 is a view illustrating a first modification of the third embodiment.

FIG. 16 is a view illustrating a second modification of the third embodiment.

FIG. 17 is a view illustrating an appearance of an unmanned transport vehicle that is an application example of the present invention.

FIG. 18 is a view illustrating an appearance of a sewing device that is an application example of the present invention.

## DESCRIPTION OF EMBODIMENTS

An embodiment of the present invention will be described in detail below with reference to the drawings.

[First embodiment]

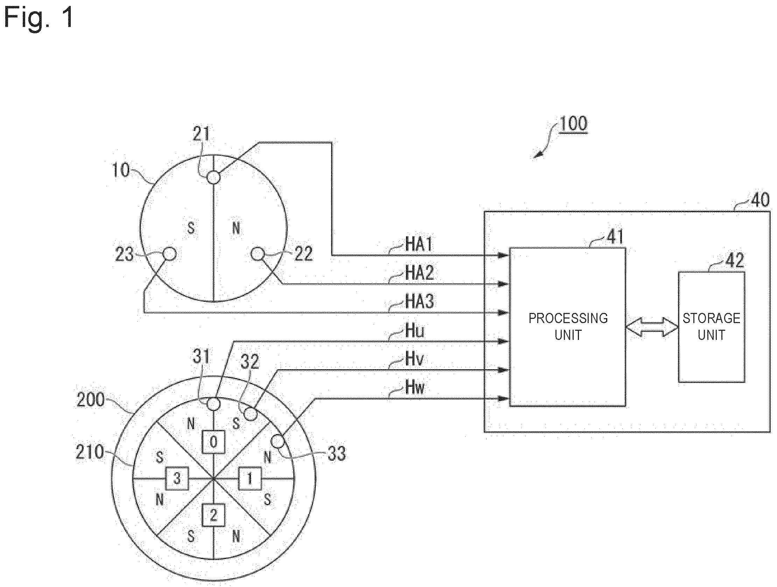

FIG. 1 is a block diagram schematically illustrating the configuration of a position estimation device 100 in the first embodiment of the present invention. As illustrated in FIG. 1, the position estimation device 100 is a device that estimates a rotational position (rotation angle) of a motor 200 including a rotor 210 having P (P is an integer of 2 or more) magnetic pole pairs. In the present embodiment, as an example, the rotor 210 has four magnetic pole pairs. The magnetic pole pair means a pair of an N pole and an S pole. That is, in the present embodiment, the rotor 210 has four pairs of N poles and S poles, and has a total of eight magnetic poles (rotor magnets).

The motor 200 is, for example, an inner rotor type three-phase brushless DC motor. Although not illustrated in FIG. 1, the motor 200 includes a stator and a motor housing in addition to the rotor 210. The motor housing internally accommodates the rotor 210 and the stator. The rotor 210 is rotatably supported around a rotation axis by a bearing component inside the motor housing. The stator has a three-phase excitation coil including a U-phase coil, a V-phase coil, and a W-phase coil, and is fixed in a state of opposing the outer peripheral surface of the rotor 210 inside the motor housing.

The position estimation device 100 includes a sensor magnet 10, three first magnetic sensors 21, 22, and 23, three second magnetic sensors 31, 32, and 33, and a signal processing device 40. Although not illustrated in FIG. 1, the motor 200 is mounted with a circuit board, and the first magnetic sensors 21, 22, and 23, the second magnetic sensors 31, 32, and 33, and the signal processing device 40 are arranged on the circuit board.

The sensor magnet 10 is a disk-shaped magnet having one magnetic pole pair and sharing a rotation axis with the rotor 210. When the rotor 210 rotates, the sensor magnet 10 rotates in synchronization with the rotor 210. The sensor magnet 10 is arranged at a position not interfering with the circuit board. The sensor magnet 10 may be arranged inside the motor housing or may be arranged outside the motor housing.

The first magnetic sensors 21, 22, and 23 are magnetic sensors opposed to the sensor magnet 10 and arranged at predetermined intervals along the rotation direction of the sensor magnet 10 on the circuit board. In the present embodiment, a case where the position estimation device 100 includes the three first magnetic sensors 21, 22, and 23 is exemplified, but the number of first magnetic sensors is only required to N1 (N1 is an integer of 3 or more). For example, each of the first magnetic sensors 21, 22, and 23 is a Hall IC incorporating a Hall element, a latch circuit, and the like. Each of the first magnetic sensors 21, 22, and 23 outputs a digital signal having levels inverted every time the sensor magnet 10 rotates by 180°.

In the present embodiment, the first magnetic sensors 21, 22, and 23 are arranged at 120° intervals along the rotation direction of the sensor magnet 10. Therefore, the digital signals output from the first magnetic sensors 21, 22, and 23 have a phase difference (first phase difference) of 120° in terms of the electrical angle with one another. Hereinafter, the digital signals output from the first magnetic sensors 21, 22, and 23 are referred to as absolute digital signals. The first magnetic sensor 21 outputs an absolute digital signal HA1 to the signal processing device 40. The first magnetic sensor 22 outputs an absolute digital signal HA2 to the signal processing device 40. The first magnetic sensor 23 outputs an absolute digital signal HA3 to the signal processing device 40.

The second magnetic sensors 31, 32, and 33 are magnetic sensors opposed to the rotor 210 and arranged at predetermined intervals along the rotation direction of the rotor 210 on the circuit board. In the present embodiment, a case where the position estimation device 100 includes the three second magnetic sensors 31, 32, and 33 is exemplified, but the number of second magnetic sensors is only required to N2 (N2 is an integer of 3 or more). For example, each of the second magnetic sensors 31, 32, and 33 is a Hall element or a linear Hall IC. Each of the second magnetic sensors 31, 32, and 33 outputs an analog signal having electric signals that fluctuate according to magnetic field strength. One cycle in electrical angle of each analog signal corresponds to 1/P of one cycle in mechanical angle. In the present embodiment, since the number P of pole pairs of the rotor 210 is "4", one cycle in electrical angle of each analog signal corresponds to 1/4 of one cycle in mechanical angle, that is, 90° in terms of the mechanical angle.

In the present embodiment, the second magnetic sensors 31, 32, and 33 are arranged at 30° intervals along the rotation direction of the rotor 210. Therefore, the analog signals output from the second magnetic sensors 31, 32, and 33 have a phase difference (second phase difference) of 120° in terms of the electrical angle with one another. Hereinafter, the analog signals output from the second magnetic sensors 31, 32, and 33 are referred to as incremental signals. The second magnetic sensor 31 outputs the incremental signal Hu to the signal processing device 40. The second magnetic sensor 32 outputs the incremental signal Hv to the signal processing device 40. The second magnetic sensor 33 outputs the incremental signal Hw to the signal processing device 40.

The signal processing device 40 is a device that processes output signals of the first magnetic sensors 21, 22, and 23 and the second magnetic sensors 31, 32, and 33. The signal processing device 40 estimates the rotational position of the motor 200, that is, the rotational position of the rotor 210 on the basis of the absolute digital signals HA1, HA2, and HA3 and the incremental signals Hu, Hv, and Hw. The signal processing device 40 includes a processing unit 41 and a storage unit 42.

The processing unit 41 is a microprocessor such as a microcontroller unit (MCU), for example. The absolute digital signals HA1, HA2, and HA3 and the incremental signals Hu, Hv, and Hw are input to the processing unit 41. The processing unit 41 is connected to the storage unit 42 via a data bus in such a manner that data communication is possible.

Note that the incremental signals Hu, Hv, and Hw are converted into digital signals via an A/D converter inside the processing unit 41, but the digital signals output from the A/D converter are also referred to as the incremental signals Hu, Hv, and Hw for convenience of description. In the following description, the absolute digital signals HA1, HA2, and HA3 and the incremental signals Hu, Hv, and Hw input to the processing unit 41 may be collectively referred to as "input sensor signal".

The processing unit 41 executes at least the following two processing according to a program stored in the storage unit 42. The processing unit 41 executes learning processing of acquiring learning data necessary for estimation of the rotational position of the rotor 210 on the basis of the input sensor signal. The processing unit 41 executes position estimation processing of estimating the rotational position of the rotor 210 on the basis of the input sensor signal and the learning data.

The storage unit 42 includes a nonvolatile memory that stores programs, various setting values, learning data, and the like necessary for causing the processing unit 41 to execute various processing, and a volatile memory used as a temporary storage destination of data when the processing unit 16 executes various processing. The nonvolatile memory is, for example, an electrically erasable programmable read-only memory (EEPROM), a flash memory, or the like. The volatile memory is, for example, a random access memory (RAM) or the like.

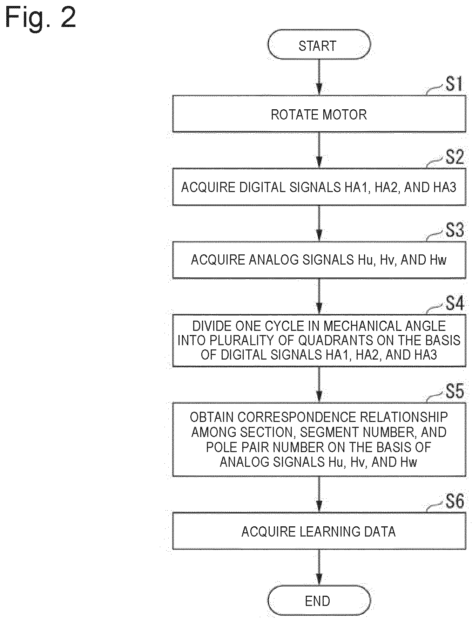

Next, learning processing executed by the processing unit 41 will be described. The learning processing corresponds to the learning step in the position estimation method of claim 1. FIG. 2 is a flowchart illustrating the learning processing executed by the processing unit 41 in the first embodiment. The processing unit 41 executes the learning processing illustrated in FIG. 2 when the power of the signal processing device 40 that executes the processing according to at least the learning step and the position estimation step is turned on for the first time.

As illustrated in FIG. 2, when starting the learning processing, the processing unit 41 first executes the first processing of rotating the sensor magnet 10 together with the rotor 210 (step S1). This first processing corresponds to the first step of the learning step in the position estimation method of claim 1.

Subsequently, the processing unit 41 executes the second processing of acquiring the three absolute digital signals HA1, HA2, and HA3 via the three first magnetic sensors 21, 22, and 23 (step S2). This second processing corresponds to the second step of the learning step in the position estimation method of claim 1.

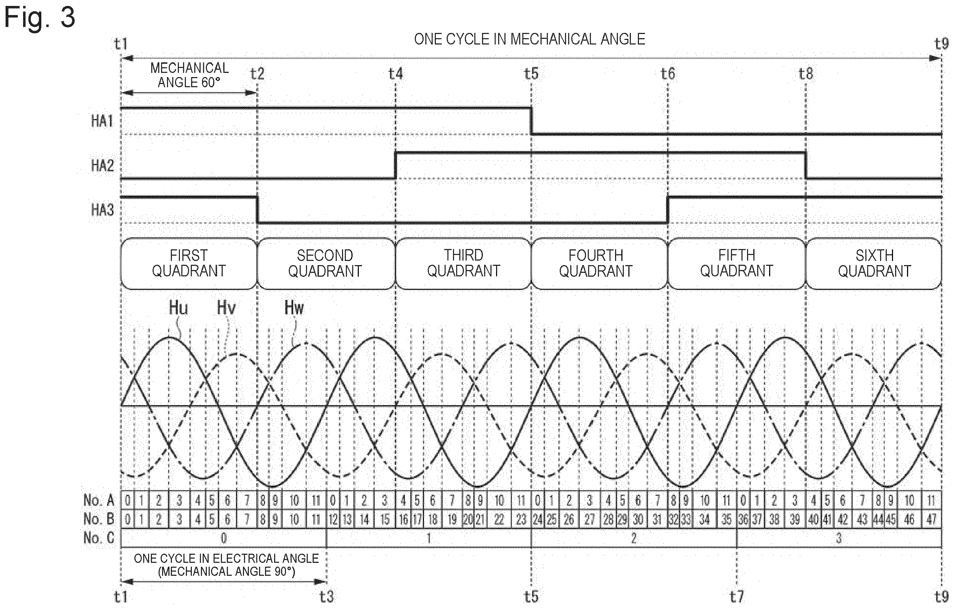

As illustrated in FIG. 3, the absolute digital signals HA1, HA2, and HA3 are digital signals having levels inverted every time the sensor magnet 10 rotates by 180° and having a phase difference of 120° in terms of the electrical angle. In FIG. 3, the period from time t1 to time t9 corresponds to one cycle in mechanical angle. In FIG. 3, the period from time t1 to time t2, the period from time t2 to time t4, the period from time t4 to time t5, the period from time t5 to time t6, the period from time t6 to time t8, and the period from time t8 to time t9 each correspond to 1/6 of one cycle in mechanical angle, that is, 60° in terms of the mechanical angle.

Subsequently, the processing unit 41 executes the third processing of acquiring the three incremental signals Hu, Hv, and Hw via the three second magnetic sensors 31, 32, and 33 (step S3). This third processing corresponds to the third step of the learning step in the position estimation method of claim 1.

As illustrated in FIG. 3, one cycle in electrical angle of each of the incremental signals Hu, Hv, and Hw corresponds to 1/4 of one cycle in mechanical angle, that is, 90° in terms of the mechanical angle. In FIG. 3, the period from time t1 to time t3, the period from time t3 to time t5, the period from time t5 to time t7, and the period from time t7 to time t9 each correspond to 90° in terms of the mechanical angle. The incremental signals Hu, Hv, and Hw have a phase difference of 120° in terms of the electrical angle from one another.

Subsequently, the processing unit 41 executes the fourth processing of dividing the learning period into a plurality of quadrants having digital values of N1 bits different from one another on the basis of the three absolute digital signals HA1, HA2, and HA3 obtained in the learning period corresponding to one cycle in mechanical angle (step S4). This fourth processing corresponds to the fourth step of the learning step in the position estimation method of claim 1.

"N1" is the number of first magnetic sensors. Therefore, in the present embodiment, since the number of first magnetic sensors is 3, the processing unit 41 divides in step S4 the learning period into a plurality of quadrants having 3-bit digital values different from one another. In the present embodiment, among the 3-bit digital values, the value of the most significant bit is the value of the absolute digital signal HA1, the value of the intermediate bit is the value of the absolute digital signal HA2, and the value of the least significant bit is the value of the absolute digital signal HA3.

As illustrated in FIG. 3, the processing unit 41 divides the learning period (one cycle in mechanical angle) into six quadrants on the basis of the absolute digital signals HA1, HA2, and HA3.

The processing unit 41 divides the period from time t1 to time t2 in the learning period as the first quadrant having a 3-bit digital value "101".

The processing unit 41 divides the period from time t2 to time t4 in the learning period as the second quadrant having a 3-bit digital value "100".

The processing unit 41 divides the period from time t4 to time t5 in the learning period as the third quadrant having a 3-bit digital value "110".

The processing unit 41 divides the period from time t5 to time t6 in the learning period as the fourth quadrant having a 3-bit digital value "010".

The processing unit 41 divides the period from time t6 to time t8 in the learning period as the fifth quadrant having a 3-bit digital value "011".

The processing unit 41 divides the period from time t8 to time t9 in the learning period as the sixth quadrant having a 3-bit digital value "001".

Subsequently, on the basis of the three incremental signals Hu, Hv, and Hw obtained in the learning period, the processing unit 41 executes the fifth processing of dividing the learning period into four pole pair regions associated with pole pair numbers representing the pole pair positions of the four magnetic pole pairs, further dividing each of the four pole pair regions into a plurality of sections, and associating a segment number representing the rotational position of the rotor 210 with each of the plurality of sections (step S5). This fifth processing corresponds to the fifth step of the learning step in the position estimation method of claim 1.

In the present embodiment, in order to estimate the rotational position of the rotor 210, the four magnetic pole pairs of the rotor 210 are assigned with pole pair numbers representing pole pair positions. For example, as illustrated in FIG. 1, the four magnetic pole pairs of the rotor 210 are assigned with the pole pair numbers in the order of "0", "1", "2", and "3" clockwise.

As illustrated in FIG. 3, in step S5, the processing unit 41 divides the learning period into the four pole pair regions on the basis of the three incremental signals Hu, Hv, and Hw obtained in the learning period. In FIG. 3, "No. C" indicates the pole pair number.

The processing unit 41 divides the period from time t1 to time t3 in the learning period as a pole pair region associated with the pole pair number "0".

The processing unit 41 divides the period from time t3 to time t5 in the learning period as a pole pair region associated with the pole pair number "1".

The processing unit 41 divides the period from time t5 to time t7 in the learning period as a pole pair region associated with the pole pair number "2".

The processing unit 41 divides the period from time t7 to time t9 in the learning period as a pole pair region associated with the pole pair number "3".

As illustrated in FIG. 3, in step S5, the processing unit 41 further divides each of the four pole pair regions into 12 sections on the basis of the three incremental signals Hu, Hv, and Hw obtained in the learning period, and associates a segment number representing the rotational position of the rotor 210 with each of the 12 sections. In FIG. 3, "No. A" indicates the section number assigned to a section, and "No. B" indicates the segment number.

As illustrated in FIG. 3, the 12 sections included in each of the four pole pair regions are assigned with the section numbers from "0" to "11". On the other hand, numbers consecutive over the entire learning period are associated with each section as segment numbers. Specifically, as illustrated in FIG. 3, in the pole pair region associated with the pole pair number "0", the section numbers "0" to "11" are associated with the segment numbers "0" to "11". In the pole pair region associated with the pole pair number "1", the section numbers "0" to "11" are associated with the segment numbers "12" to "23". In the pole pair region associated with the pole pair number "2", the section numbers "0" to "11" are associated with the segment numbers "24" to "35". In the pole pair region associated with the pole pair number "3", the section numbers "0" to "11" are associated with the segment numbers "36" to "47".

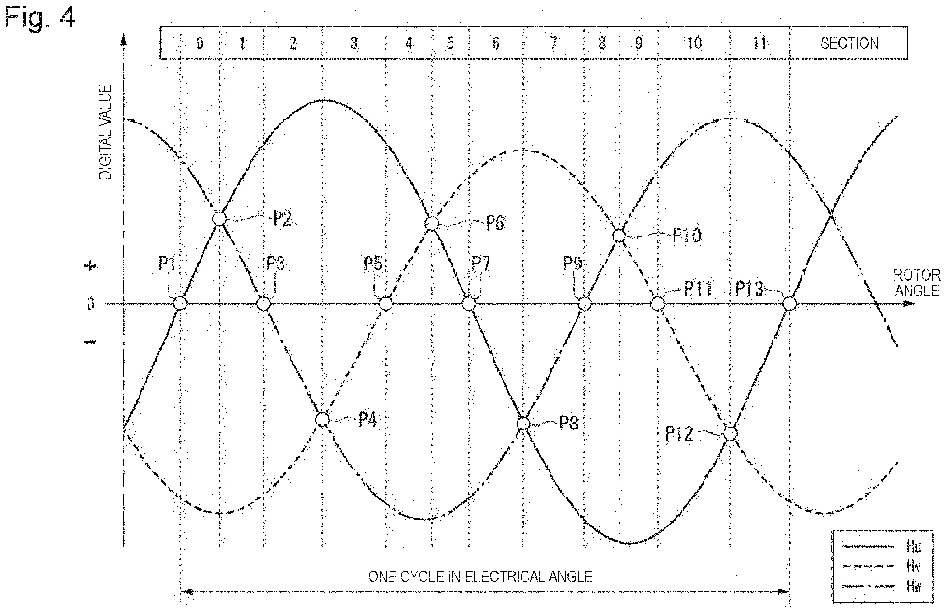

FIG. 4 is an enlarged view of the incremental signals Hu, Hv, and Hw included in one pole pair region. Hereinafter, among the processing included in the fifth processing executed by the processing unit 41, processing of dividing each of the four pole pair regions into 12 sections will be specifically described with reference to FIG. 4. In FIG. 4, the reference value of amplitude is "0". In FIG. 4, the digital value of amplitude that is a positive value represents a digital value of the magnetic field strength of the N pole, as an example. The digital value of amplitude that is a negative value represents a digital value of the magnetic field strength of the S pole, as an example.

In the fifth processing of the learning processing, the processing unit 41 executes processing of extracting a zero cross point that is a point at which the three incremental signals Hu, Hv, and Hw included in each of the four pole pair regions intersect a reference value "0". As illustrated in FIG. 4, the processing unit 41 extracts a point P1, a point P3, a point P5, a point P7, a point P9, a point P11, and a point P13 as zero cross points.

In the fifth processing of the learning processing, the processing unit 41 executes processing of extracting an intersection point that is a point at which the three incremental signals Hu, Hv, and Hw included in each of the four pole pair regions intersect one another. As illustrated in FIG. 4, the processing unit 41 extracts a point P2, a point P4, a point P6, a point P8, a point P10, and a point P12 as intersection points.

In the fifth processing of the learning processing, the processing unit 41 executes processing of determining, as a section, an interval between the zero cross point and the intersection point adjacent to each other.

As illustrated in FIG. 4, the processing unit 41 determines the interval between the zero cross point P1 and the intersection point P2 as a section assigned with the section number "0".

The processing unit 41 determines the interval between the intersection point P2 and the zero cross point P3 as a section assigned with the section number "1".

The processing unit 41 determines the interval between the zero cross point P3 and the intersection point P4 as a section assigned with the section number "2".

The processing unit 41 determines the interval between the intersection point P4 and the zero cross point P5 as a section assigned with the section number "3".

The processing unit 41 determines the interval between the zero cross point P5 and the intersection point P6 as a section assigned with the section number "4".

The processing unit 41 determines the interval between the intersection point P6 and the zero cross point P7 as a section assigned with the section number "5".

The processing unit 41 determines the interval between the zero cross point P7 and the intersection point P8 as a section assigned with the section number "6".

The processing unit 41 determines the interval between the intersection point P8 and the zero cross point P9 as a section assigned with the section number "7".

The processing unit 41 determines the interval between the zero cross point P9 and the intersection point P10 as a section assigned with the section number "8".

The processing unit 41 determines the interval between the intersection point P10 and the zero cross point P11 as a section assigned with the section number "9".

The processing unit 41 determines the interval between the zero cross point P11 and the intersection point P12 as a section assigned with the section number "10".

The processing unit 41 determines the interval between the intersection point P12 and the zero cross point P13 as a section assigned with the section number "11".

When the fifth processing of the learning processing as described above is performed, as illustrated in FIG. 3, the learning period is divided into four pole pair regions associated with pole pair numbers, each of the four pole pair regions is divided into 12 sections, and the segment number is associated with each of the sections. Note that in the following description, for example, a section assigned with the section number "0" will be referred to as "0th section", and a section assigned with the section number "11" will be referred to as "11th section".

Subsequently, the processing unit 41 executes the sixth processing of acquiring, as learning data, data indicating the correspondence relationship between the segment number associated with a section included in each of the six quadrants and a pole pair number indicating the pole pair position, and storing the acquired learning data into the storage unit 42 (step S6). This sixth processing corresponds to the sixth step of the learning step in the position estimation method of claim 1.

As illustrated in FIG. 3, the first quadrant includes eight sections from the 0th section to the 7th section. The learning data includes data indicating the correspondence relationship between the segment numbers "0" to "7" associated with the 0th section to the 7th section included in the first quadrant and the pole pair number "0".

As illustrated in FIG. 3, the second quadrant includes four sections from the 8th section to the 11th section and four sections from the 0th section to the 3rd section. The learning data includes data indicating the correspondence relationship between the segment numbers "8" to "11" associated with the 8th section to the 11th section included in the second quadrant and the pole pair number "0". Data indicating the correspondence relationship between the segment numbers "12" to "15" associated with the 0th section to the 3rd section included in the second quadrant and the pole pair number "1" is included.

As illustrated in FIG. 3, the third quadrant includes eight sections from the 4th section to the 11th section. The learning data includes data indicating the correspondence relationship between the segment numbers "16" to "23" associated with the 4th section to the 11th section included in the third quadrant and the pole pair number "1".

As illustrated in FIG. 3, the fourth quadrant includes eight sections from the 0th section to the 7th section. The learning data includes data indicating the correspondence relationship between the segment numbers "24" to "31" associated with the 0th section to the 7th section included in the fourth quadrant and the pole pair number "2".

As illustrated in FIG. 3, the fifth quadrant includes four sections from the 8th section to the 11th section and four sections from the 0th section to the 3rd section. The learning data includes data indicating the correspondence relationship between the segment numbers "32" to "35" associated with the 8th section to the 11th section included in the fifth quadrant and the pole pair number "2". Data indicating the correspondence relationship between the segment numbers "36" to "39" associated with the 0th section to the 3rd section included in the fifth quadrant and the pole pair number "3" is included.

As illustrated in FIG. 3, the sixth quadrant includes eight sections from the 4th section to the 11th section. The learning data includes data indicating the correspondence relationship between the segment numbers "40" to "47" associated with the 4th section to the 11th section included in the sixth quadrant and the pole pair number "3".

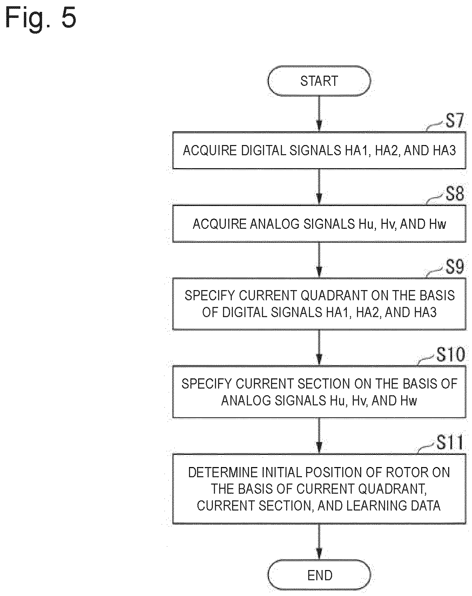

Next, the position estimation processing executed by the processing unit 41 will be described. The position estimation processing corresponds to the position estimation step in the position estimation method of claim 1. FIG. 5 is a flowchart illustrating the position estimation processing executed by the processing unit 41 in the first embodiment. After executing the above-described learning processing, the processing unit 41 executes the position estimation processing illustrated in FIG. 5 when the power of the signal processing device 40 is turned on again.

As illustrated in FIG. 5, when starting the position estimation processing, the processing unit 41 first executes the seventh processing of acquiring the three absolute digital signals HA1, HA2, and HA3 via the three first magnetic sensors 21, 22, and 23 (step S7). This seventh processing corresponds to the seventh step of the position estimation step in the position estimation method of claim 1.

Subsequently, the processing unit 41 executes the eighth processing of acquiring the three incremental signals Hu, Hv, and Hw via the three second magnetic sensors 31, 32, and 33 (step S8). This eighth processing corresponds to the eighth step of the position estimation step in the position estimation method of claim 1.

Subsequently, the processing unit 41 executes the ninth processing (step S9) of specifying the current quadrant from among the six quadrants on the basis of the three absolute digital signals HA1, HA2, and HA3 acquired in the seventh processing (step S7). This ninth processing corresponds to the ninth step of the position estimation step in the position estimation method of claim 1.

In step S9, the processing unit 41 specifies the current quadrant from among the six quadrants on the basis of the 3-bit digital values indicated by the absolute digital signals HA1, HA2, and HA3. For example, when the 3-bit digital value is "100", the processing unit 41 specifies the second quadrant as the current quadrant.

Subsequently, the processing unit 41 executes the tenth processing (step S10) of specifying the current section from among the 12 sections on the basis of the three incremental signals Hu, Hv, and Hw acquired in the above-described eighth processing (step S8). This tenth processing corresponds to the tenth step of the position estimation step in the position estimation method of claim 1.

In step S10, the processing unit 41 specifies the current section from among the 12 sections on the basis of, for example, the magnitude relationship among detection values of the incremental signals Hu, Hv, and Hw, the positive and negative signs of each detection value, and the like. As illustrated in FIG. 4, for example, in the 2nd section, the detection value of the incremental signal Hu is the largest and has a positive sign. In the 2nd section, the detection value of the incremental signal Hw is the second largest and has a negative sign. In the 2nd section, the detection value of the incremental signal Hv is the smallest and has a negative sign. In a case where the magnitude relationship among the detection values of the incremental signals Hu, Hv, and Hw and the positive and negative signs of each detection value satisfy the condition of the 2nd section as described above, the processing unit 41 specifies the 2nd section as the current section.

Subsequently, on the basis of the learning data stored in the storage unit 42, the processing unit 41 executes the eleventh processing of determining, as the initial position of the rotor 210, the pole pair number corresponding to the segment number associated with the current section included in the current quadrant (step S11). This 111th processing corresponds to the eleventh step of the position estimation step in the position estimation method of claim 1.

For example, as described above, it is assumed that the second quadrant is specified as the current quadrant, and the 2nd section is specified as the current section. As illustrated in FIG. 3, the learning data includes data indicating the correspondence relationship between the segment numbers "12" to "15" associated with the 0th section to the 3rd section included in the second quadrant and the pole pair number "1". Therefore, in the case where the second quadrant is specified as the current quadrant and the 2nd section is specified as the current section, the processing unit 41 determines, as the initial position of the rotor 210, the pole pair number "1" corresponding to the segment number "14" associated with the 2nd section included in the second quadrant.

As described above, the position estimation device 100 of the first embodiment includes the processing unit 41 that executes the learning processing of acquiring learning data necessary for estimation of the rotational position of the rotor 210 on the basis of an input sensor signal and the position estimation processing of estimating the rotational position of the rotor 210 on the basis of the input sensor signal and the learning data. The processing unit 41 executes the learning processing at least when the power of the signal processing device 40 is turned on for the first time, thereby acquiring, as the learning data, data indicating the correspondence relationship between the segment number associated with the section included in each of the six quadrants and the pole pair number representing the pole pair position. The processing unit 41 determines the initial position of the rotor 210 by executing the position estimation processing when the power of the signal processing device 40 is turned on again.

Due to this, the position estimation device 100 of the first embodiment can estimate the initial position of the rotor 210 without rotating the rotor 210. Therefore, the motor 200 including the position estimation device 100 needs not adjust the origin point of the rotational position of the rotor 210 when the power is turned on. Since the motor 200 does not need a preliminary rotation operation for origin point adjustment, it can be suitably used for applications for driving motors such as robots, unmanned transport vehicles, and the like in which the preliminary rotation operation is not allowed. Since the motor 200 does not need a preliminary rotation operation for origin point adjustment, the driving time and power consumption required for the preliminary rotation operation can be reduced.

(Modification of first embodiment)

The present invention is not limited to the first embodiment described above, and each configuration described in the present description can be appropriately combined within a range not contradictory to one another.

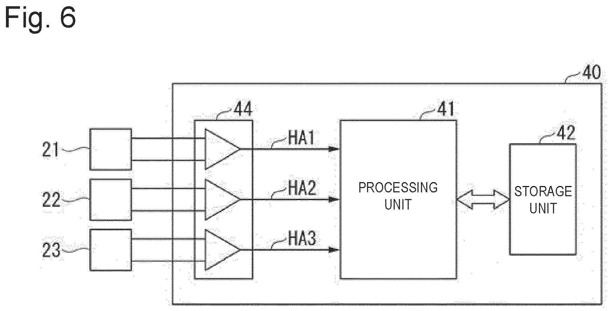

In the first embodiment, the case where each of the first magnetic sensors 21, 22, and 23 is a Hall IC incorporating a Hall element, a latch circuit, and the like has been exemplified. For example, as illustrated in FIG. 6, the first magnetic sensors 21, 22, and 23 may each be replaced with a Hall element, and a comparator circuit 44 that converts analog signals output from the three Hall elements into the absolute digital signals HA1, HA2, and HA3 may be provided in the signal processing device 40. The comparator circuit 44 may be provided outside the processing unit 41 or may be provided inside the processing unit 41.

In the first embodiment, the case where three first magnetic sensors that output absolute digital signals are provided has been exemplified, but the number of first magnetic sensors is not limited to three, and the number of first magnetic sensors is only required to N1 (N1 is an integer of 3 or more).

In the first embodiment, the case where three second magnetic sensors that output incremental signal are provided has been exemplified, but the number of second magnetic sensors is not limited to three, and the number of second magnetic sensors is only required to N2 (N2 is an integer of 3 or more).

In the first embodiment, the motor including the rotor having the four magnetic pole pairs is exemplified, but the number of pole pairs of the rotor is not limited to four, and the number of pole pairs of the rotor is only required to be P (P is an integer of 2 or more).

[Second embodiment]

Next, the second embodiment of the present invention will be described.

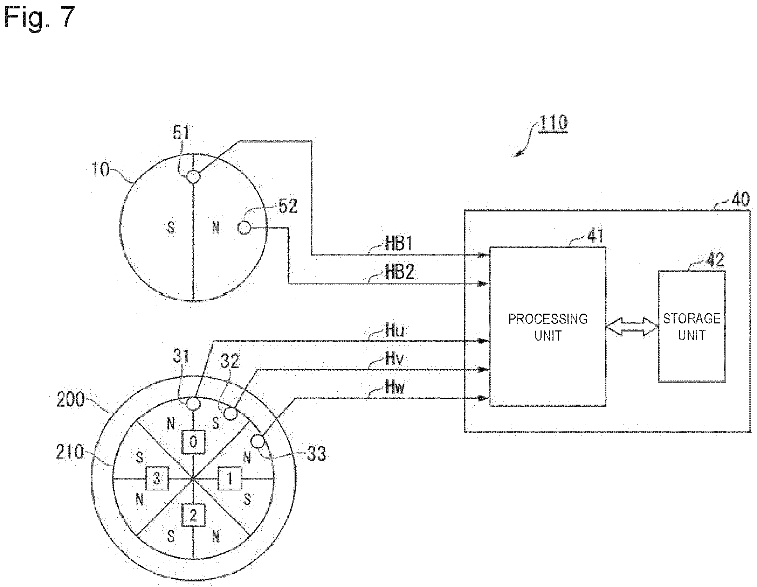

FIG. 7 is a block diagram schematically illustrating the configuration of a position estimation device 110 in the second embodiment of the present invention. As illustrated in FIG. 7, the position estimation device 110 is a device that estimates a rotational position (rotation angle) of the motor 200 including the rotor 210 having P (P is an integer of 2 or more) magnetic pole pairs. In the present embodiment, as an example, the rotor 210 has four magnetic pole pairs. Since the configuration of the motor 200 is similar to that of the first embodiment, description regarding the motor 200 will be omitted in the second embodiment.

The position estimation device 110 includes the sensor magnet 10, two third magnetic sensors 51 and 52, the three second magnetic sensors 31, 32, and 33, and the signal processing device 40. Although not illustrated in FIG. 7, the motor 200 is mounted with a circuit board, and the third magnetic sensors 51 and 52, the second magnetic sensors 31, 32, and 33, and the signal processing device 40 are arranged on the circuit board.

The sensor magnet 10 is similar to that of the first embodiment. That is, the sensor magnet 10 is a disk-shaped magnet having one magnetic pole pair and sharing a rotation axis with the rotor 210. When the rotor 210 rotates, the sensor magnet 10 rotates in synchronization with the rotor 210.

The third magnetic sensors 52 and 53 are magnetic sensors opposed to the sensor magnet 10 and arranged at predetermined intervals along the rotation direction of the sensor magnet 10 on the circuit board. In the present embodiment, the case where the position estimation device 110 includes the two third magnetic sensors 51 and 52 has been exemplified, but the number of third magnetic sensors is only required to N3 (N3 is an integer of 2 or more). For example, each of the third magnetic sensors 51 and 52 is a Hall element or a linear Hall IC. Each of the third magnetic sensors 51 and 52 outputs an analog signal having electric signals that fluctuate according to magnetic field strength. One cycle in electrical angle of analog signals output from the third magnetic sensors 51 and 52 corresponds to one cycle in mechanical angle.

In the present embodiment, the third magnetic sensors 51 and 52 are arranged at 90° intervals along the rotation direction of the sensor magnet 10. Therefore, the analog signals output from the third magnetic sensors 51 and 52 have a phase difference (third phase difference) of 90° in terms of the electrical angle with each other. Hereinafter, the analog signals output from the third magnetic sensors 51 and 52 are referred to as absolute analog signals. The third magnetic sensor 51 outputs an absolute analog signal HB1 to the signal processing device 40. The third magnetic sensor 52 outputs an absolute analog signal HB2 to the signal processing device 40.

The second magnetic sensors 31, 32, and 33 are magnetic sensors opposed to the rotor 210 and arranged at predetermined intervals along the rotation direction of the rotor 210 on the circuit board. Since the second magnetic sensors 31, 32, and 33 are similar to those of the first embodiment, description regarding the second magnetic sensors 31, 32, and 33 will be omitted in the second embodiment.

The signal processing device 40 of the second embodiment estimates the rotational position of the motor 200, that is, the rotational position of the rotor 210 on the basis of the absolute analog signals HB1 and HA2 output from the third magnetic sensors 51 and 52 and the incremental signals Hu, Hv, and Hw output from the second magnetic sensors 31, 32, and 33. The signal processing device 40 includes a processing unit 41 and a storage unit 42. Since the storage unit 42 is similar to that of the first embodiment, description regarding the storage unit 42 will be omitted in the second embodiment.

The absolute analog signals HB1 and HB2 and the incremental signals Hu, Hv, and Hw are input to the processing unit 41. The absolute analog signals HB1 and HB2 and the incremental signals Hu, Hv, and Hw are converted into digital signals via the A/D converter inside the processing unit 41, but the digital signals output from the A/D converter are also referred to as the absolute analog signals HB1 and HB2 and the incremental signals Hu, Hv, and Hw for convenience of description. In the following description, the absolute analog signals HB1 and HB2 and the incremental signals Hu, Hv, and Hw input to the processing unit 41 may be collectively referred to as "input sensor signal".

The processing unit 41 executes at least the following two processing according to a program stored in the storage unit 42. The processing unit 41 executes learning processing of acquiring learning data necessary for estimation of the rotational position of the rotor 210 on the basis of the input sensor signal. The processing unit 41 executes position estimation processing of estimating the rotational position of the rotor 210 on the basis of the input sensor signal and the learning data. The second embodiment is different from the first embodiment in content of the learning processing and the position estimation processing executed by the processing unit 41.

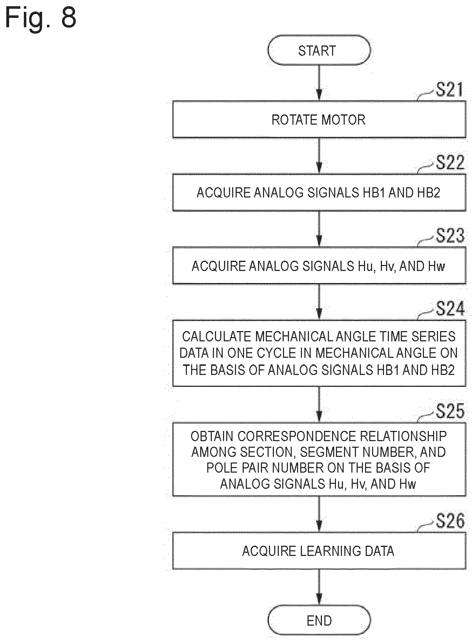

Next, the learning processing executed by the processing unit 41 of the second embodiment will be described. The learning processing corresponds to the learning step in the position estimation method of claim 2. FIG. 8 is a flowchart illustrating the learning processing executed by the processing unit 41 in the second embodiment. The processing unit 41 executes the learning processing illustrated in FIG. 8 at least when the power of the signal processing device 40 is turned on for the first time.

As illustrated in FIG. 8, when starting the learning processing, the processing unit 41 first executes the first processing of rotating the sensor magnet 10 together with the rotor 210 (step S21). This first processing corresponds to the first step of the learning step in the position estimation method of claim 2.

Subsequently, the processing unit 41 executes the second processing of acquiring the two absolute analog signals HB1 and HB2 via the two third magnetic sensors 51 and 52 (step S22). This second processing corresponds to the second step of the learning step in the position estimation method of claim 2.

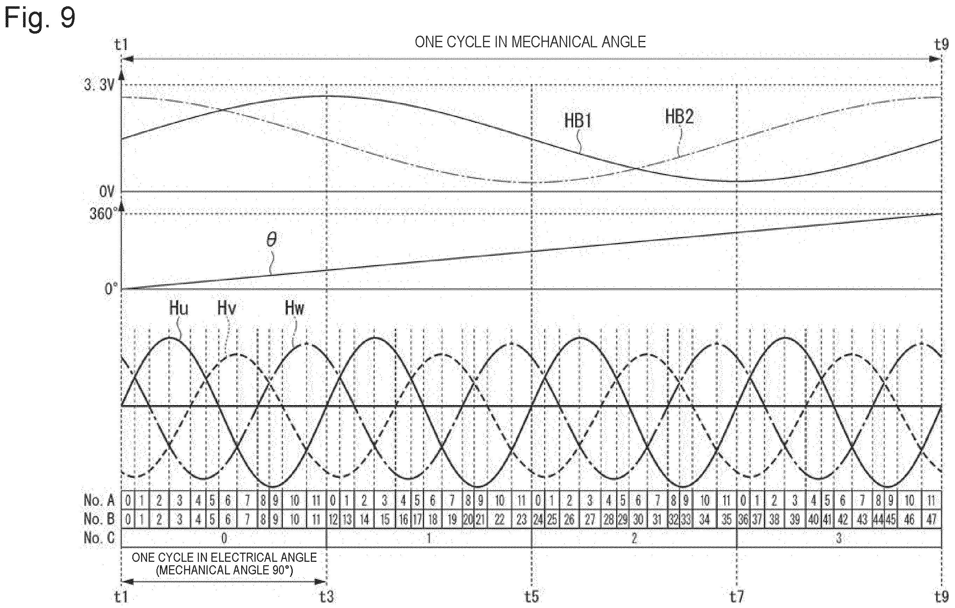

As illustrated in FIG. 9, one cycle in electrical angle of each of the absolute analog signals HB1 and HB2 corresponds to one cycle in mechanical angle. In FIG. 9, the period from time t1 to time t9 corresponds to one cycle in mechanical angle. The absolute analog signals HB1 and HB2 have a phase difference of 90° in terms of the electrical angle with each other.

Subsequently, the processing unit 41 executes the third processing of acquiring the three incremental signals Hu, Hv, and Hw via the three second magnetic sensors 31, 32, and 33 (step S23). This third processing corresponds to the third step of the learning step in the position estimation method of claim 2.

As illustrated in FIG. 9, similarly to the first embodiment, one cycle in electrical angle of each of the incremental signals Hu, Hv, and Hw corresponds to 1/4 of one cycle in mechanical angle, that is, 90° in terms of the mechanical angle. In FIG. 3, the period from time t1 to time t3, the period from time t3 to time t5, the period from time t5 to time t7, and the period from time t7 to time t9 each correspond to 90° in terms of the mechanical angle. The incremental signals Hu, Hv, and Hw have a phase difference of 120° in terms of the electrical angle from one another.

Subsequently, the processing unit 41 executes the fourth processing of calculating the time series data of a mechanical angle θ in the learning period on the basis of the two absolute analog signals HB1 and HB2 obtained in the learning period corresponding to one cycle in mechanical angle (step S24). This fourth processing corresponds to the fourth step of the learning step in the position estimation method of claim 2.

For example, in step S24, the processing unit 41 samples, at a predetermined sampling frequency, the absolute analog signals HB1 and HB2 obtained during the learning period, and substitutes the sampling value of the absolute analog signal HB1 and the sampling value of the absolute analog signal HB2 into the following arithmetic expression (1), thereby calculating the time series data of the mechanical angle θ. Hereinafter, the time series data of the mechanical angle θ is referred to as mechanical angle time series data.

$$\text{Mechanical angle } \theta = \tan^{-1} (HB1/HB2) \ldots (1)$$

Subsequently, on the basis of the three incremental signals Hu, Hv, and Hw obtained in the learning period, the processing unit 41 executes the fifth processing of dividing the learning period into four pole pair regions associated with pole pair numbers representing the pole pair positions of the four magnetic pole pairs, further dividing each of the four pole pair regions into a plurality of sections, and associating a segment number representing the rotational position of the rotor 210 with each of the plurality of sections (step S25). This fifth processing corresponds to the fifth step of the learning step in the position estimation method of claim 2.

When the processing of step S25 is performed, as illustrated in FIG. 9, the learning period is divided into four pole pair regions associated with pole pair numbers, each of the four pole pair regions is divided into 12 sections, and the segment number is associated with each of the sections. Since the processing of step S25 is similar to step S5 of the learning processing in the first embodiment, description regarding step S25 will be omitted in the second embodiment.

Subsequently, the processing unit 41 executes the sixth processing of acquiring, as learning data, data indicating the correspondence relationship between the mechanical angle time series data and the pole pair number, and storing the acquired learning data into the storage unit 42 (step S26). This sixth processing corresponds to the sixth step of the learning step in the position estimation method of claim 2.

For example, as illustrated in FIG. 9, in the learning data, the pole pair number "0" is associated with the mechanical angle θ from 0° (360°) to 89° in the mechanical angle time series data. In the learning data, the pole pair number "1" is associated with the mechanical angle θ from 90° to 179° in the mechanical angle time series data. In the learning data, the pole pair number "2" is associated with the mechanical angle θ from 180° to 269° in the mechanical angle time series data. In the learning data, the pole pair number "3" is associated with the mechanical angle θ from 270° to 359° in the mechanical angle time series data.

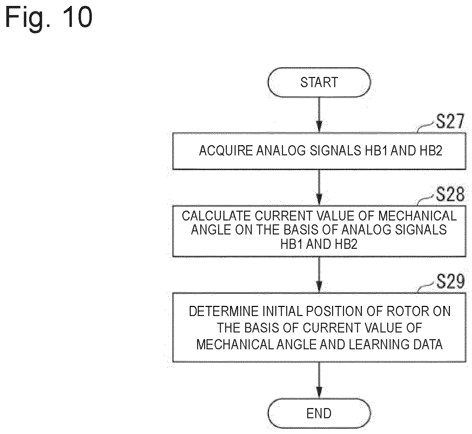

Next, the position estimation processing executed by the processing unit 41 of the second embodiment will be described. The position estimation processing of the second embodiment corresponds to the position estimation step in the position estimation method of claim 2. FIG. 10 is a flowchart illustrating the position estimation processing executed by the processing unit 41 in the second embodiment. After executing the learning processing illustrated in FIG. 8, the processing unit 41 executes the position estimation processing illustrated in FIG. 10 when the power of the signal processing device 40 is turned on again.

As illustrated in FIG. 10, when starting the position estimation processing, the processing unit 41 first executes the seventh processing of acquiring the two absolute analog signals HB1 and HA2 via the two third magnetic sensors 51 and 52 (step S27). This seventh processing corresponds to the seventh step of the position estimation step in the position estimation method of claim 2.

Subsequently, the processing unit 41 executes the eighth processing (step S28) of calculating the current value of the mechanical angle θ on the basis of the two absolute analog signals HB1 and HA2 acquired in the seventh processing (step S27). This eighth processing corresponds to the eighth step of the position estimation step in the position estimation method of claim 2. In step S28, the processing unit 41 substitutes the sampling value of the absolute analog signal HB1 and the sampling value of the absolute analog signal HB2 into the arithmetic expression (1) described above, thereby calculating the current value of the mechanical angle θ.

Subsequently, on the basis of the learning data stored in the storage unit 42, the processing unit 41 executes the ninth processing of determining, as the initial position of the rotor 210, the pole pair number corresponding to the current value of the mechanical angle θ (step S29). This ninth processing corresponds to the ninth step of the position estimation step in the position estimation method of claim 2.

For example, it is assumed that a value included in a range from 90° to 179° is calculated as the current value of the mechanical angle θ. As described above, in the learning data, the pole pair number "1" is associated with the mechanical angle θ from 90° to 179° in the mechanical angle time series data. Therefore, in the case where a value included in the range from 90° to 179° is calculated as the current value of the mechanical angle θ, the processing unit 41 determines, as the initial position of the rotor 210, the pole pair number "1" corresponding to the current value of the mechanical angle θ.

As described above, the position estimation device 110 of the second embodiment includes the processing unit 41 that executes the learning processing of acquiring learning data necessary for estimation of the rotational position of the rotor 210 on the basis of an input sensor signal and the position estimation processing of estimating the rotational position of the rotor 210 on the basis of the input sensor signal and the learning data. The processing unit 41 executes the learning processing at least when the power of the signal processing device 40 is turned on for the first time, thereby acquiring, as the learning data, data indicating the correspondence relationship between the mechanical angle time series data and the pole pair number. The processing unit 41 determines the initial position of the rotor 210 by executing the position estimation processing when the power of the signal processing device 40 is turned on again.

Due to this, similarly to the first embodiment, the position estimation device 110 of the second embodiment can estimate the initial position of the rotor 210 without rotating the rotor 210. Therefore, the motor 200 including the position estimation device 110 needs not adjust the origin point of the rotational position of the rotor 210 when the power is turned on. Since the motor 200 does not need a preliminary rotation operation for origin point adjustment, it can be suitably used for applications for driving motors such as robots, unmanned transport vehicles, and the like in which the preliminary rotation operation is not allowed. Since the motor 200 does not need a preliminary rotation operation for origin point adjustment, the driving time and power consumption required for the preliminary rotation operation can be reduced.

(Modification of second embodiment)

The present invention is not limited to the second embodiment described above, and each configuration described in the present description can be appropriately combined within a range not contradictory to one another.

In the second embodiment, the case where two third magnetic sensors that output absolute analog signals are provided has been exemplified, but the number of third magnetic sensors is not limited to two, and the number of third magnetic sensors is only required to N3 (N3 is an integer of 2 or more). That is, the number of third magnetic sensors may be three or more.

In the second embodiment, the case where three second magnetic sensors that output incremental signals are provided has been exemplified, but the number of second magnetic sensors is not limited to three, and the number of second magnetic sensors is only required to N2 (N2 is an integer of 3 or more).

In the second embodiment, the motor including the rotor having the four magnetic pole pairs is exemplified, but the number of pole pairs of the rotor is not limited to four, and the number of pole pairs of the rotor is only required to be P (P is an integer of 2 or more).

[Third embodiment]

Next, the third embodiment of the present invention will be described.

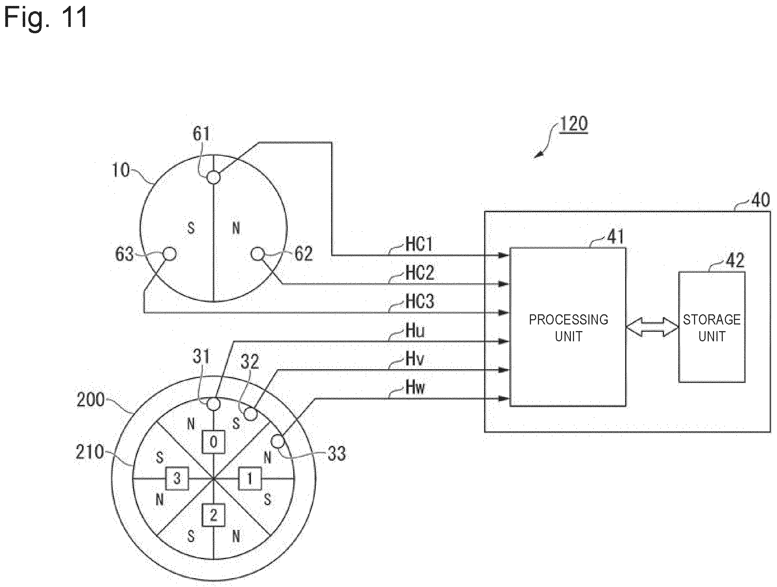

FIG. 11 is a block diagram schematically illustrating the configuration of a position estimation device 120 in the third embodiment of the present invention. As illustrated in FIG. 11, the position estimation device 120 is a device that estimates a rotational position (rotation angle) of the motor 200 including the rotor 210 having P (P is an integer of 2 or more) magnetic pole pairs. In the present embodiment, as an example, the rotor 210 has four magnetic pole pairs. Since the configuration of the motor 200 is similar to that of the first embodiment, description regarding the motor 200 will be omitted in the third embodiment.

The position estimation device 120 includes the sensor magnet 10, three fourth magnetic sensors 61, 62, and 63, the three second magnetic sensors 31, 32, and 33, and the signal processing device 40. Although not illustrated in FIG. 11, the motor 200 is mounted with a circuit board, and the fourth magnetic sensors 61, 62, and 63, the second magnetic sensors 31, 32, and 33, and the signal processing device 40 are arranged on the circuit board.

The sensor magnet 10 is similar to that of the first embodiment. That is, the sensor magnet 10 is a disk-shaped magnet having one magnetic pole pair and sharing a rotation axis with the rotor 210. When the rotor 210 rotates, the sensor magnet 10 rotates in synchronization with the rotor 210.

The fourth magnetic sensors 61, 62, and 63 are magnetic sensors opposed to the sensor magnet 10 and arranged at predetermined intervals along the rotation direction of the sensor magnet 10 on the circuit board. In the present embodiment, a case where the position estimation device 120 includes the three fourth magnetic sensors 61, 62, and 63 is exemplified, but the number of fourth magnetic sensors is only required to N4 (N4 is an integer of 3 or more). For example, each of the fourth magnetic sensors 61, 62, and 63 is a Hall element or a linear Hall IC. Each of the fourth magnetic sensors 61, 62, and 63 outputs an analog signal having electric signals that fluctuate according to magnetic field strength. One cycle in electrical angle of analog signal output from each of the fourth magnetic sensors 61, 62, and 63 corresponds to one cycle in mechanical angle.

In the present embodiment, the fourth magnetic sensors 61, 62, and 63 are arranged at 120° intervals along the rotation direction of the sensor magnet 10. Therefore, the analog signals output from the fourth magnetic sensors 61, 62, and 63 have a phase difference (fourth phase difference) of 120° in terms of the electrical angle with one another. Hereinafter, the analog signals output from the fourth magnetic sensors 61, 62, and 63 are referred to as absolute analog signals. The fourth magnetic sensor 61 outputs the absolute analog signal HC1 to the signal processing device 40. The fourth magnetic sensor 62 outputs the absolute analog signal HC2 to the signal processing device 40. The fourth magnetic sensor 63 outputs the absolute analog signal HC3 to the signal processing device 40.

The second magnetic sensors 31, 32, and 33 are magnetic sensors opposed to the rotor 210 and arranged at predetermined intervals along the rotation direction of the rotor 210 on the circuit board. Since the second magnetic sensors 31, 32, and 33 are similar to those of the first embodiment, description regarding the second magnetic sensors 31, 32, and 33 will be omitted in the third embodiment.

The signal processing device 40 of the third embodiment estimates the rotational position of the motor 200, that is, the rotational position of the rotor 210 on the basis of the absolute analog signals HC1, HC2, and HC3 output from the fourth magnetic sensors 61, 62, and 63 and the incremental signals Hu, Hv, and Hw output from the second magnetic sensors 31, 32, and 33. The signal processing device 40 includes a processing unit 41 and a storage unit 42. Since the storage unit 42 is similar to that of the first embodiment, description regarding the storage unit 42 will be omitted in the third embodiment.

The absolute analog signals HC1, HC2, and HC3 and the incremental signals Hu, Hv, and Hw are input to the processing unit 41. The absolute analog signals HC1, HC2, and HC3 and the incremental signals Hu, Hv, and Hw are converted into digital signals via the A/D converter inside the processing unit 41, but the digital signals output from the A/D converter are also referred to as the absolute analog signals HC1, HC2, and HC3 and the incremental signals Hu, Hv, and Hw for convenience of description. In the following description, the absolute analog signals HC1, HC2, and HC3 and the incremental signals Hu, Hv, and Hw input to the processing unit 41 may be collectively referred to as "input sensor signal".

The processing unit 41 executes at least the following two processing according to a program stored in the storage unit 42. The processing unit 41 executes learning processing of acquiring learning data necessary for estimation of the rotational position of the rotor 210 on the basis of the input sensor signal. The processing unit 41 executes position estimation processing of estimating the rotational position of the rotor 210 on the basis of the input sensor signal and the learning data. The third embodiment is different from the first embodiment and the second embodiment in content of the learning processing and the position estimation processing executed by the processing unit 41.

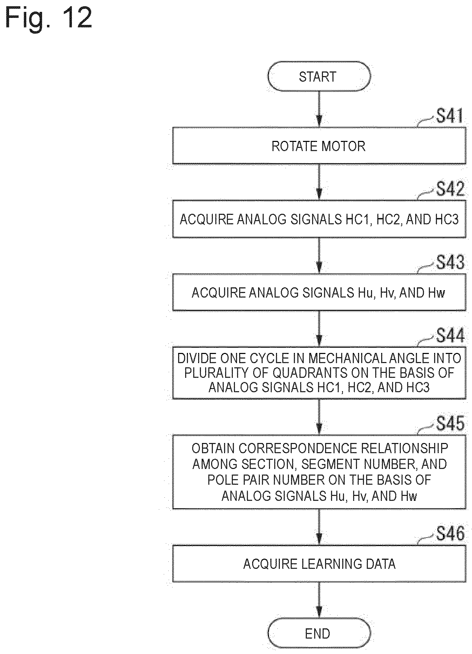

Next, the learning processing executed by the processing unit 41 of the third embodiment will be described. The learning processing corresponds to the learning step in the position estimation method of claim 3. FIG. 12 is a flowchart illustrating the learning processing executed by the processing unit 41 in the third embodiment. The processing unit 41 executes the learning processing illustrated in FIG. 12 at least when the power of the signal processing device 40 is turned on for the first time.

As illustrated in FIG. 12, when starting the learning processing, the processing unit 41 first executes the first processing of rotating the sensor magnet 10 together with the rotor 210 (step S41). This first processing corresponds to the first step of the learning step in the position estimation method of claim 3.

Subsequently, the processing unit 41 executes the second processing of acquiring the three absolute analog signals HC1, HC2, and HC3 via the three fourth magnetic sensors 61, 62, and 63 (step S42). This second processing corresponds to the second step of the learning step in the position estimation method of claim 3.

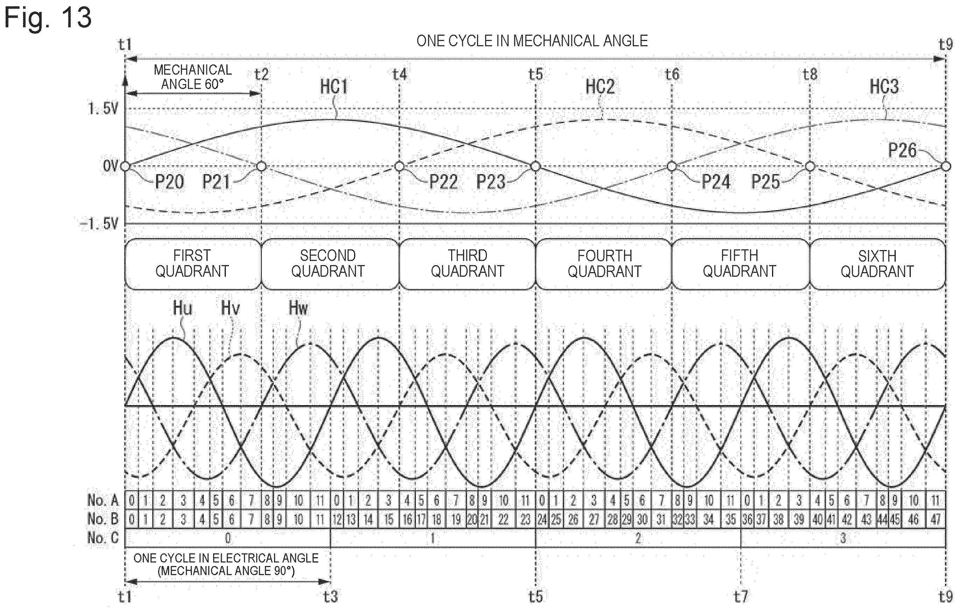

As illustrated in FIG. 13, one cycle in electrical angle of each of the absolute analog signals HC1, HC2, and HC3 corresponds to one cycle in mechanical angle. In FIG. 13, the period from time t1 to time t9 corresponds to one cycle in mechanical angle. The absolute analog signals HC1, HC2, and HC3 have a phase difference of 120° in terms of the electrical angle from one another.

Subsequently, the processing unit 41 executes the third processing of acquiring the three incremental signals Hu, Hv, and Hw via the three second magnetic sensors 31, 32, and 33 (step S43). This third processing corresponds to the third step of the learning step in the position estimation method of claim 3.

As illustrated in FIG. 13, similarly to the first embodiment, one cycle in electrical angle of each of the incremental signals Hu, Hv, and Hw corresponds to 1/4 of one cycle in mechanical angle, that is, 90° in terms of the mechanical angle. In FIG. 13, the period from time t1 to time t3, the period from time t3 to time t5, the period from time t5 to time t7, and the period from time t7 to time t9 each correspond to 90° in terms of the mechanical angle. The incremental signals Hu, Hv, and Hw have a phase difference of 120° in terms of the electrical angle from one another.

Subsequently, the processing unit 41 executes the fourth processing of dividing the learning period into a plurality of quadrants on the basis of the three absolute analog signals HC1, HC2, and HC3 obtained in the learning period corresponding to one cycle in mechanical angle (step S44). This fourth processing corresponds to the fourth step of the learning step in the position estimation method of claim 3.

In step S44, the processing unit 41 executes processing of extracting a zero cross point that is a point at which the three absolute analog signals HC1, HC2, and HC3 intersect the reference value "0". As illustrated in FIG. 13, the processing unit 41 extracts a point P20, a point P21, a point P22, a point P23, a point P24, a point P25, and a point P26 as zero cross points of the absolute analog signals HC1, HC2, and HC3. Then, the processing unit 41 divides, as a quadrant, an interval between two zero cross points adjacent to each other.

As illustrated in FIG. 13, the processing unit 41 divides the interval between the zero cross point P20 and the zero cross point P21 as the first quadrant.

The processing unit 41 divides the interval between the zero cross point P21 and the zero cross point P22 as the second quadrant.

The processing unit 41 divides the interval between the zero cross point P22 and the zero cross point P23 as the third quadrant.

The processing unit 41 divides the interval between the zero cross point P23 and the zero cross point P24 as the fourth quadrant.

The processing unit 41 divides the interval between the zero cross point P24 and the zero cross point P25 as the fifth quadrant.

The processing unit 41 divides the interval between the zero cross point P25 and the zero cross point P26 as the sixth quadrant.

In this manner, in the third embodiment, the processing unit 41 divides the learning period into the six quadrants on the basis of the absolute analog signals HC1, HC2, and HC3.

Subsequently, on the basis of the three incremental signals Hu, Hv, and Hw obtained in the learning period, the processing unit 41 executes the fifth processing of dividing the learning period into four pole pair regions associated with pole pair numbers representing the pole pair positions of the four magnetic pole pairs, further dividing each of the four pole pair regions into a plurality of sections, and associating a segment number representing the rotational position of the rotor 210 with each of the plurality of sections (step S45). This fifth processing corresponds to the fifth step of the learning step in the position estimation method of claim 3.

When the processing of step S45 is performed, as illustrated in FIG. 13, the learning period is divided into four pole pair regions associated with pole pair numbers, each of the four pole pair regions is divided into 12 sections, and the segment number is associated with each of the sections. Since the processing of step S45 is similar to step S5 of the learning processing in the first embodiment, description regarding step S45 will be omitted in the third embodiment.

Subsequently, the processing unit 41 executes the sixth processing of acquiring, as learning data, data indicating the correspondence relationship between the segment number associated with a section included in each of the six quadrants and a pole pair number indicating the pole pair position, and storing the acquired learning data into the storage unit 42 (step S46). This sixth processing corresponds to the sixth step of the learning step in the position estimation method of claim 3. As illustrated in FIG. 13, since the learning data acquired in the third embodiment is similar to the learning data acquired in the first embodiment, description regarding the learning data will be omitted in the third embodiment.

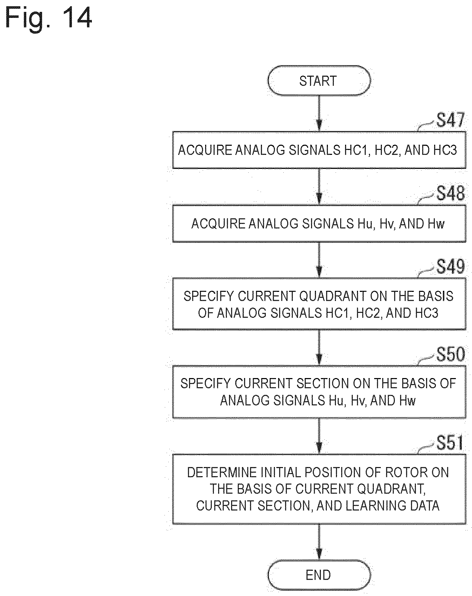

Next, the position estimation processing executed by the processing unit 41 of the third embodiment will be described. The position estimation processing of the third embodiment corresponds to the position estimation step in the position estimation method of claim 3. FIG. 14 is a flowchart illustrating the position estimation processing executed by the processing unit 41 in the third embodiment. After executing the learning processing illustrated in FIG. 12, the processing unit 41 executes the position estimation processing illustrated in FIG. 14 when the power of the signal processing device 40 is turned on again.

As illustrated in FIG. 14, when starting the position estimation processing, the processing unit 41 first executes the seventh processing of acquiring the three absolute analog signals HC1, HC2, and HC3 via the three fourth magnetic sensors 61, 62, and 63 (step S47). This seventh processing corresponds to the seventh step of the position estimation step in the position estimation method of claim 3.

Subsequently, the processing unit 41 executes the eighth processing of acquiring the three incremental signals Hu, Hv, and Hw via the three second magnetic sensors 31, 32, and 33 (step S48). This eighth processing corresponds to the eighth step of the position estimation step in the position estimation method of claim 3.

Subsequently, the processing unit 41 executes the ninth processing (step S49) of specifying the current quadrant from among the six quadrants on the basis of the three absolute analog signals HC1, HC2, and HC3 acquired in the seventh processing (step S47). This ninth processing corresponds to the ninth step of the position estimation step in the position estimation method of claim 3.

In step S49, the processing unit 41 specifies the current quadrant from among the six quadrants on the basis of, for example, the magnitude relationship among the detection values of the absolute analog signals HC1, HC2, and HC3, the positive and negative signs of each detection value, and the like. For example, it is assumed that the processing unit 41 specifies, as the current quadrant, the second quadrant from among the six quadrants.

Subsequently, the processing unit 41 executes the tenth processing (step S50) of specifying the current section from among the 12 sections on the basis of the three incremental signals Hu, Hv, and Hw acquired in the above-described eighth processing (step S48). This tenth processing corresponds to the tenth step of the position estimation step in the position estimation method of claim 3. Since the specification method of the current section is similar to that in the first embodiment, description regarding the specification method of the current section will be omitted in the third embodiment. For example, it is assumed that the processing unit 41 specifies the 2nd section as the current section.

Subsequently, on the basis of the learning data stored in the storage unit 42, the processing unit 41 executes the eleventh processing of determining, as the initial position of the rotor 210, the pole pair number corresponding to the segment number associated with the current section included in the current quadrant (step S51). This eleventh processing corresponds to the eleventh step of the position estimation step in the position estimation method of claim 3.

For example, as described above, it is assumed that the second quadrant is specified as the current quadrant, and the 2nd section is specified as the current section. As illustrated in FIG. 13, the learning data includes data indicating the correspondence relationship between the segment numbers "12" to "15" associated with the 0th section to the 3rd section included in the second quadrant and the pole pair number "1". Therefore, in the case where the second quadrant is specified as the current quadrant and the 2nd section is specified as the current section, the processing unit 41 determines, as the initial position of the rotor 210, the pole pair number "1" corresponding to the segment number "14" associated with the 2nd section included in the second quadrant.

As described above, the position estimation device 120 of the third embodiment includes the processing unit 41 that executes the learning processing of acquiring learning data necessary for estimation of the rotational position of the rotor 210 on the basis of an input sensor signal and the position estimation processing of estimating the rotational position of the rotor 210 on the basis of the input sensor signal and the learning data. The processing unit 41 executes the learning processing at least when the power of the signal processing device 40 is turned on for the first time, thereby acquiring, as the learning data, data indicating the correspondence relationship between the segment number associated with the section included in each of the six quadrants and the pole pair number representing the pole pair position. The processing unit 41 determines the initial position of the rotor 210 by executing the position estimation processing when the power of the signal processing device 40 is turned on again.

Due to this, similarly to the first embodiment, the position estimation device 120 of the third embodiment can estimate the initial position of the rotor 210 without rotating the rotor 210. Therefore, the motor 200 including the position estimation device 120 needs not adjust the origin point of the rotational position of the rotor 210 when the power is turned on. Since the motor 200 does not need a preliminary rotation operation for origin point adjustment, it can be suitably used for applications for driving motors such as robots, unmanned transport vehicles, and the like in which the preliminary rotation operation is not allowed. Since the motor 200 does not need a preliminary rotation operation for origin point adjustment, the driving time and power consumption required for the preliminary rotation operation can be reduced.

(Modification of third embodiment)

The present invention is not limited to the third embodiment described above, and each configuration described in the present description can be appropriately combined within a range not contradictory to one another.

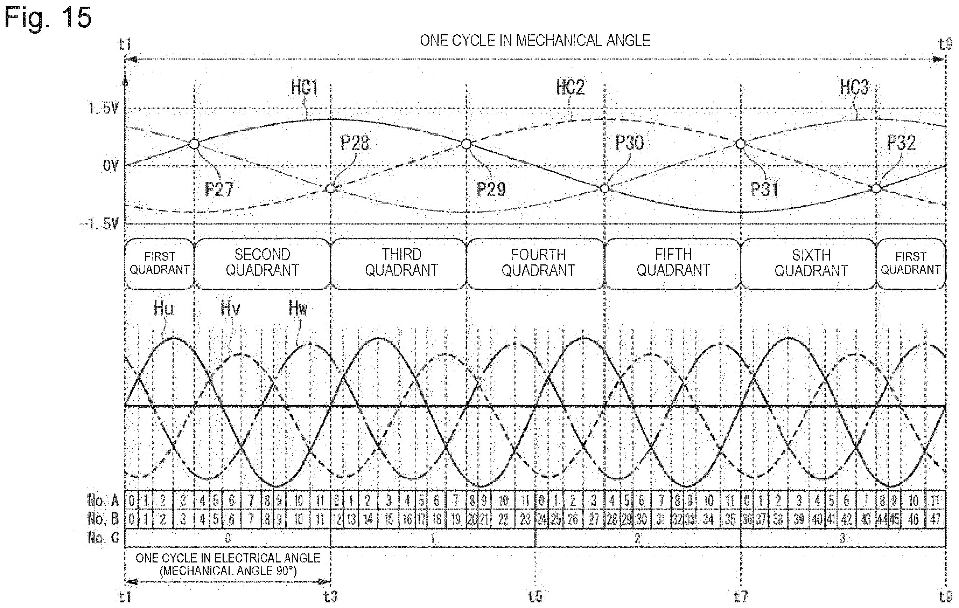

In the third embodiment, the case where the processing unit 41 divides the learning period into six quadrants by extracting the zero cross points of the three absolute analog signals HC1, HC2, and HC3 obtained in the learning period corresponding to one cycle in mechanical angle has been exemplified. For example, as illustrated in FIG. 15, the processing unit 41 may divide the learning period into six quadrants by extracting intersection points of the three absolute analog signals HC1, HC2, and HC3 obtained in the learning period corresponding to one cycle in mechanical angle.

Specifically, in the modification illustrated in FIG. 15, the processing unit 41 executes processing of extracting an intersection point at which the three absolute analog signals HC1, HC2, and HC3 intersect with one another. As illustrated in FIG. 15, the processing unit 41 extracts a point P27, a point P28, a point P29, a point P30, a point P31, and a point P32 as intersection points of the absolute analog signals HC1, HC2, and HC3. Then, the processing unit 41 divides, as a quadrant, an interval between two intersection points adjacent to each other.

As illustrated in FIG. 15, the processing unit 41 divides the interval between the intersection point P32 and the intersection point P27 as the first quadrant. The processing unit 41 divides the interval between the intersection point P27 and the intersection point P28 as the second quadrant. The processing unit 41 divides the interval between the intersection point P28 and the intersection point P29 as the third quadrant. The processing unit 41 divides the interval between the intersection point P29 and the intersection point P30 as the fourth quadrant. The processing unit 41 divides the interval between the intersection point P30 and the intersection point P31 as the fifth quadrant. The processing unit 41 divides the interval between the intersection point P31 and the intersection point P32 as the sixth quadrant.

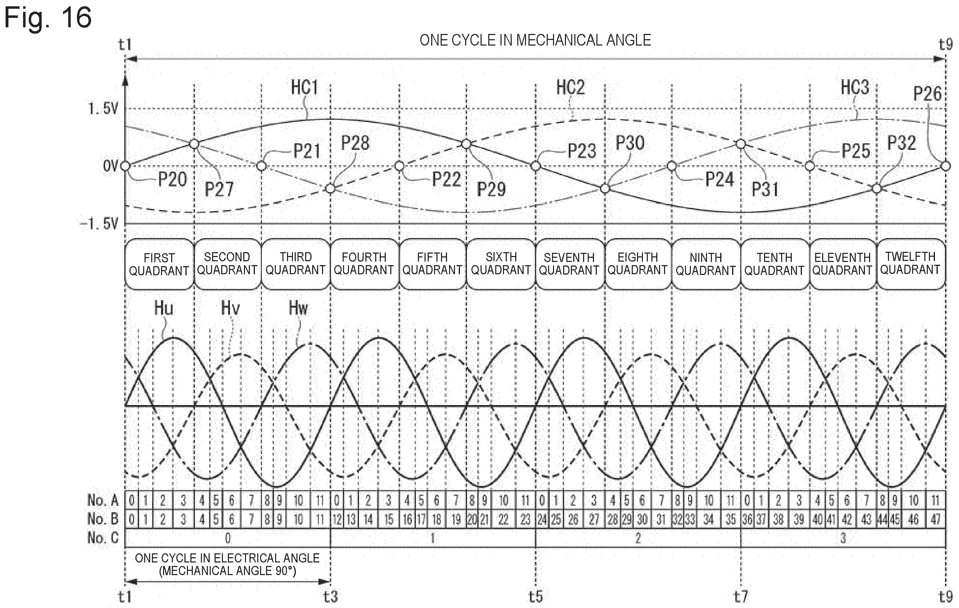

For example, as illustrated in FIG. 16, the processing unit 41 may divide the learning period into 12 quadrants by extracting a zero cross point and an intersection point of the three absolute analog signals HC1, HC2, and HC3 obtained in the learning period corresponding to one cycle in mechanical angle. Specifically, in the modification illustrated in FIG. 16, the processing unit 41 divides, as a quadrant, an interval between a zero cross point and an intersection point adjacent to each other.

As illustrated in FIG. 16, the processing unit 41 divides the interval between the zero cross point P20 and the intersection point P27 as the first quadrant. The processing unit 41 divides the interval between the intersection point P27 and the zero cross point P21 as the second quadrant. The processing unit 41 divides the interval between the zero cross point P21 and the intersection point P28 as the third quadrant. The processing unit 41 divides the interval between the intersection point P28 and the zero cross point P22 as the fourth quadrant. The processing unit 41 divides the interval between the zero cross point P22 and the intersection point P29 as the fifth quadrant. The processing unit 41 divides the interval between the intersection point P29 and the zero cross point P23 as the sixth quadrant.

The processing unit 41 divides the interval between the zero cross point P23 and the intersection point P30 as the seventh quadrant. The processing unit 41 divides the interval between the intersection point P30 and the zero cross point P24 as the eighth quadrant. The processing unit 41 divides the interval between the zero cross point P24 and the intersection point P31 as the ninth quadrant. The processing unit 41 divides the interval between the intersection point P31 and the zero cross point P25 as the tenth quadrant. The processing unit 41 divides the interval between the zero cross point P25 and the intersection point P32 as the eleventh quadrant. The processing unit 41 divides the interval between the intersection point P32 and the zero cross point P26 as the twelfth quadrant.

In this manner, by extracting the zero cross point and the intersection point of the three absolute analog signals HC1, HC2, and HC3 obtained in the learning period corresponding to one cycle in mechanical angle, it is possible to divide the learning period into 12 quadrants.

In the third embodiment, the case where three fourth magnetic sensors that output absolute analog signals are provided has been exemplified, but the number of fourth magnetic sensors is not limited to three, and the number of fourth magnetic sensors is only required to N4 (N4 is an integer of 3 or more). That is, the number of fourth magnetic sensors may be four or more.

In the third embodiment, the case where three second magnetic sensors that output incremental signal are provided has been exemplified, but the number of second magnetic sensors is not limited to three, and the number of second magnetic sensors is only required to N2 (N2 is an integer of 3 or more).

In the third embodiment, the motor including the rotor having the four magnetic pole pairs is exemplified, but the number of pole pairs of the rotor is not limited to four, and the number of pole pairs of the rotor is only required to be P (P is an integer of 2 or more).

[Application examples]

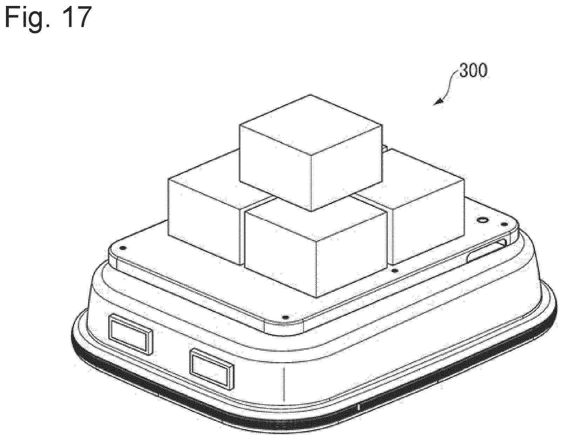

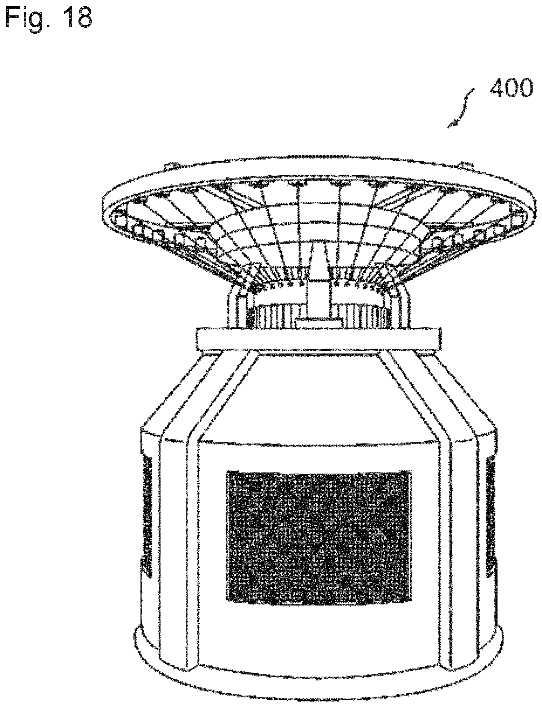

FIG. 17 is a view illustrating an appearance of an unmanned transport vehicle 300, which is an application example of the present invention. FIG. 18 is a view illustrating an appearance of a sewing device 400, which is an application example of the present invention.

The unmanned transport vehicle 300 and the sewing device 400 include a motor including a rotor having P (P is an integer of 2 or more) magnetic pole pairs, and a position estimation device that estimates a rotational position of the motor. As the motor, the motor 200 described in the above embodiments can be used. As the position estimation device, it is possible to use a position estimation device of any of the position estimation device 100 of the first embodiment, the position estimation device 110 of the second embodiment, and the position estimation device 120 of the third embodiment. Since the motor provided in the unmanned transport vehicle 300 and the sewing device 400 does not need a preliminary rotation operation for origin point adjustment, it is possible to prevent unintended operations of the unmanned transport vehicle 300 and the sewing device 400. Note that the application examples of the present invention are not limited to the unmanned transport vehicle 300 and the sewing device 400, and the present invention can be widely applied to devices such as, for example, robots in which the preliminary rotation operation of the motor is not allowed.

REFERENCE SIGNS LIST

100, 110, 120 position estimation device
10 sensor magnet (magnet)
21, 22, 23 first magnetic sensor
31, 32, 33 second magnetic sensor
40 signal processing device
41 processing unit
42 storage unit
51, 52 third magnetic sensor
61, 62, 63 fourth magnetic sensor
200 motor
210 rotor

300 unmanned transport vehicle
400 sewing device

**Claims**

1. A position estimation method for estimating a rotational position of a motor (200) including a rotor (210) having P magnetic pole pairs, wherein P is an integer of 2 or more, the position estimation method comprising:

   a learning step of acquiring learning data necessary for estimation of the rotational position; and
   a position estimation step of estimating the rotational position of the rotor (210) on a basis of the learning data, wherein
   the learning step includes

   a first step of rotating, together with the rotor (210), a magnet (10) having one magnetic pole pair and sharing a rotation axis with the rotor (210),
   a second step of acquiring N1 digital signals having levels inverted every time the magnet (10) rotates by 180° and having a first phase difference from one another, by using N1 first magnetic sensors (21, 22, 23) opposed to the magnet (10) and arranged along a rotation direction of the magnet (10), wherein N1 is an integer of 3 or more,
   a third step of acquiring N2 analog signals having electric signals that fluctuate according to magnetic field strength and having a second phase difference from one another, by using N2 second magnetic sensors (31, 32, 33) opposed to the rotor (210) and arranged along a rotation direction of the rotor (210), wherein N2 is an integer of 3 or more, **characterized by**
   a fourth step of dividing a learning period into a plurality of quadrants having digital values of N1 bits different from one another on a basis of the N1 digital signals obtained in the learning period corresponding to one cycle in terms of a mechanical angle,
   a fifth step of, on a basis of the N2 analog signals obtained in the learning period, dividing the learning period into P pole pair regions associated with pole pair numbers representing pole pair positions of the P magnetic pole pairs, further dividing each of the P pole pair regions into a plurality of sections, and associating a segment number representing the rotational position with each of the plurality of sections, and
   a sixth step of acquiring, as the learning data, data indicating a correspondence relationship between the segment number associated with the section included in each of the plurality of quadrants and the pole pair number indicating the pole pair position, and

   the position estimation step includes

   a seventh step of acquiring the N1 digital signals by using the N1 first magnetic sensors (21, 22, 23),
   an eighth step of acquiring the N2 analog signals by using the N2 second magnetic sensors (31, 32, 33),
   a ninth step of specifying a current quadrant from among the plurality of quadrants on a basis of the N1 digital signals acquired in the seventh step,
   a tenth step of specifying a current section from among the plurality of sections on a basis of the N2 analog signals acquired in the eighth step, and
   an eleventh step of determining, as an initial position of the rotor (210), a pole pair number corresponding to a segment number associated with the current section included in the current quadrant on a basis of the learning data.

2. The position estimation method according to claim 1, wherein
   the fifth step of the learning step includes

   a step of extracting a zero cross point that is a point at which the N2 analog signals included in each of the P pole pair regions intersect a reference value,
   a step of extracting an intersection point that is a point at which the N2 analog signals included in each of the P pole pair regions intersect one another, and
   a step of determining, as the section, an interval between the zero cross point and the intersection point adjacent to each other.

3. The position estimation method according to claim 1 or 2, wherein

the learning step is performed when power of a signal processing device (40) that executes processing according to at least the learning step and the position estimation step is turned on for a first time, and

the position estimation step is performed when the power of the signal processing device (40) is turned on again after the learning step is executed.

4. A position estimation device (100, 110, 120) that estimates a rotational position of a motor (200) including a rotor (210) having P magnetic pole pairs, wherein P is an integer of 2 or more, the position estimation device (100, 110, 120) comprising:

a magnet (10) having one magnetic pole pair and sharing a rotation axis with the rotor (210);

N1 first magnetic sensors (21, 22, 23) opposed to the magnet (10) and arranged along a rotation direction of the magnet (10), wherein N1 is an integer of 3 or more;

N2 second magnetic sensors (31, 32, 33) opposed to the rotor (210) and arranged along a rotation direction of the rotor (210), wherein N2 is an integer of 3 or more; and

a signal processing device (40) that processes output signals of the first magnetic sensor (21, 22, 23) and the second magnetic sensor (31, 32, 33), wherein

the signal processing device (40) includes

a processing unit (41) that executes learning processing of acquiring learning data necessary for estimation of the rotational position and position estimation processing of estimating a rotational position of the rotor (210) on a basis of the learning data, and

a storage unit (42) that stores the learning data,

the processing unit (41) executes, as the learning processing,

first processing of rotating the magnet (10) together with the rotor (210),

second processing of acquiring N1 digital signals having levels inverted every time the magnet (10) rotates by 180° and having a first phase difference from one another, via the N1 first magnetic sensors (21, 22, 23),

third processing of acquiring N2 analog signals having electric signals that fluctuate according to magnetic field strength and having a second phase difference from one another, via the N2 second magnetic sensors (31, 32, 33), **characterized by**

fourth processing of dividing a learning period into a plurality of quadrants having digital values of N1 bits different from one another on a basis of the N1 digital signals obtained in the learning period corresponding to one cycle in terms of a mechanical angle,

fifth processing of, on a basis of the N2 analog signals obtained in the learning period, dividing the learning period into P pole pair regions associated with pole pair numbers representing pole pair positions of the P magnetic pole pairs, further dividing each of the P pole pair regions into a plurality of sections, and associating a segment number representing the rotational position with each of the plurality of sections, and

sixth processing of storing, into the storage unit (42), as the learning data, data indicating a correspondence relationship between the segment number associated with the section included in each of the plurality of quadrants and the pole pair number representing the pole pair position, and

the processing unit (41) executes, as the position estimation processing,

seventh processing of acquiring the N1 digital signals via the N1 first magnetic sensors (21, 22, 23),

eighth processing of acquiring the N2 analog signals via the N2 second magnetic sensors (31, 32, 33),

ninth processing of specifying a current quadrant from among the plurality of quadrants on a basis of the N1 digital signals acquired in the seventh processing,

tenth processing of specifying a current section from among the plurality of sections on a basis of the N2 analog signals acquired in the eighth processing, and

eleventh processing of determining, as an initial position of the rotor (210), a pole pair number corresponding to a segment number associated with the current section included in the current quadrant on a basis of the learning data.

5. The position estimation device (100, 110, 120) according to claim 4, wherein in the fifth processing of the learning processing, the processing unit (41) executes

processing of extracting a zero cross point that is a point at which the N2 analog signals included in each of the P pole pair regions intersect a reference value,

processing of extracting an intersection point that is a point at which the N2 analog signals included in each of the P pole pair regions intersect one another, and

processing of determining, as the section, an interval between the zero cross point and the intersection point adjacent to each other.

6. The position estimation device (100, 110, 120) according to claim 4 or 5, wherein

the processing unit (41) executes the learning processing at least when power of the signal processing device (40) is turned on for a first time, and

the processing unit (41) executes the position estimation processing when the power of the signal processing device (40) is turned on again after executing the learning processing.

7. An unmanned transport vehicle (300), comprising:

a motor (200) including a rotor (210) having P magnetic pole pairs, wherein P is an integer of 2 or more; and

the position estimation device (100, 110, 120) according to any one of claims 4 to 6 that estimates a rotational position of the motor (200).

8. A sewing device (400), comprising:

a motor (200) including a rotor (210) having P magnetic pole pairs, wherein P is an integer of 2 or more; and

the position estimation device (100, 110, 120) according to any one of claims 4 to 6 that estimates a rotational position of the motor (200).

**Patentansprüche**

1. Positionsschätzverfahren zum Schätzen einer Drehposition eines Motors (200), der einen Rotor (210) aufweist, der P Magnetpolpaare aufweist, wobei P eine ganze Zahl größer oder gleich 2 ist, wobei das Positionsschätzverfahren aufweist:

einen Lernschritt zum Erfassen von Lerndaten, die zum Schätzen der Drehposition erforderlich sind; und

einen Positionsschätzschritt zum Schätzen der Drehposition des Rotors (210) auf der Grundlage der Lerndaten, wobei der Lernschritt aufweist:

einen ersten Schritt zum Drehen, zusammen mit dem Rotor (210), eines Magneten (10), der ein Magnetpolpaar aufweist und eine Drehachse mit dem Rotor (210) teilt,

einen zweiten Schritt zum Erfassen von N1 digitalen Signalen, die Niveaus aufweisen, die jedes Mal, wenn sich der Magnet (10) um 180° dreht, invertiert werden und eine erste Phasendifferenz zueinander aufweisen, unter Verwendung von N1 ersten Magnetsensoren (21, 22, 23), die dem Magneten (10) gegenüberliegen und entlang einer Drehrichtung des Magneten (10) angeordnet sind, wobei N1 eine ganze Zahl größer oder gleich 3 ist,

einen dritten Schritt zum Erfassen von N2 analogen Signalen, die elektrische Signale aufweisen, die entsprechend einer Magnetfeldstärke schwanken und eine zweite Phasendifferenz zueinander aufweisen, unter Verwendung von N2 zweiten Magnetsensoren (31, 32, 33), die dem Rotor (210) gegenüberliegen und entlang einer Drehrichtung des Rotors (210) angeordnet sind, wobei N2 eine ganze Zahl größer oder gleich 3 ist, **gekennzeichnet durch**

einen vierten Schritt zum Unterteilen einer Lernperiode in mehrere Quadranten, die digitale Werte von N1 Bits aufweisen, die sich voneinander unterscheiden, auf der Grundlage der N1 digitalen Signale, die in der Lernperiode erhalten wurden, die mit einem Zyklus in Bezug auf einen mechanischen Winkel korrespondiert,

einen fünften Schritt zum Unterteilen der Lernperiode auf der Grundlage der in der Lernperiode erhaltenen N2 analogen Signale in P Polpaarbereiche, die mit Polpaarnummern assoziiert sind, die Polpaarpositionen der P Magnetpolpaare darstellen, zum weiteren Unterteilen jedes der P Polpaarbereiche in mehrere Abschnitte und zum Assoziieren einer Segmentnummer, die die Drehposition darstellt, mit einem jeweiligen der mehreren Abschnitte, und

einen sechsten Schritt zum Erfassen, als die Lerndaten, von Daten, die eine Korrespondenzbeziehung zwischen der Segmentnummer, die dem in einem jeweiligen der mehreren Quadranten enthaltenen Abschnitt zugeordnet ist, und der Polpaarnummer, die die Polpaarposition angibt, angeben, und
wobei der Positionsschätzschritt aufweist:

> einen siebten Schritt zum Erfassen der N1 digitalen Signale unter Verwendung der N1 ersten Magnetsensoren (21, 22, 23),
> einen achten Schritt zum Erfassen der N2 analogen Signale unter Verwendung der N2 zweiten Magnetsensoren (31, 32, 33),
> einen neunten Schritt zum Spezifizieren eines aktuellen Quadranten aus den mehreren Quadranten auf der Grundlage der im siebten Schritt erfassten N1 digitalen Signale,
> einen zehnten Schritt zum Spezifizieren eines aktuellen Abschnitts aus den mehreren Abschnitten auf der Grundlage der im achten Schritt erfassten N2 analogen Signale und
> einen elften Schritt zum Ermitteln, als Anfangsposition des Rotors (210), einer Polpaarnummer, die mit einer Segmentnummer korrespondiert, die dem aktuellen Abschnitt zugeordnet ist, der in dem aktuellen Quadranten enthalten ist, auf der Grundlage der Lerndaten.

2. Positionsschätzverfahren nach Anspruch 1, wobei der fünfte Schritt des Lernschritts aufweist:

> einen Schritt zum Extrahieren eines Nulldurchgangspunkts, der ein Punkt ist, an dem die in jeweiligen der P Polpaarbereiche enthaltenen N2 analogen Signale einen Referenzwert schneiden,
> einen Schritt zum Extrahieren eines Schnittpunkts, der ein Punkt ist, an dem die in jeweiligen der P Polpaarbereiche enthaltenen N2 analogen Signale einander schneiden, und
> einen Schritt zum Ermitteln, als der Abschnitt, eines Intervalls zwischen dem Nulldurchgangspunkt und dem Schnittpunkt, die benachbart zueinander sind.

3. Positionsschätzverfahren nach Anspruch 1 oder 2, wobei

> der Lernschritt durchgeführt wird, wenn eine Leistung einer Signalverarbeitungsvorrichtung (40), die eine Verarbeitung gemäß zumindest dem Lernschritt und dem Positionsschätzschritt ausführt, zum ersten Mal eingeschaltet wird, und
> der Positionsschätzschritt durchgeführt wird, wenn die Leistung der Signalverarbeitungsvorrichtung (40) nach der Ausführung des Lernschritts wieder eingeschaltet wird.

4. Positionsschätzvorrichtung (100, 110, 120), die eine Drehposition eines Motors (200) schätzt, der einen Rotor (210) aufweist, der P Magnetpolpaare aufweist, wobei P eine ganze Zahl größer oder gleich 2 ist, wobei die Positionsschätzvorrichtung (100, 110, 120) aufweist:

> einen Magneten (10), der ein Magnetpolpaar aufweist und eine Drehachse mit dem Rotor (210) teilt;
> N1 erste Magnetsensoren (21, 22, 23), die dem Magneten (10) gegenüberliegen und entlang einer Drehrichtung des Magneten (10) angeordnet sind, wobei N1 eine ganze Zahl größer oder gleich 3 ist;
> N2 zweite Magnetsensoren (31, 32, 33), die dem Rotor (210) gegenüberliegen und entlang einer Drehrichtung des Rotors (210) angeordnet sind, wobei N2 eine ganze Zahl größer oder gleich 3 ist; und
> eine Signalverarbeitungsvorrichtung (40), die Ausgangssignale des ersten Magnetsensors (21, 22, 23) und des zweiten Magnetsensors (31, 32, 33) verarbeitet, wobei

die Signalverarbeitungsvorrichtung (40) aufweist:

> eine Verarbeitungseinheit (41), die eine Lernverarbeitung zum Erfassen von Lerndaten, die zum Schätzen der Drehposition erforderlich sind, und eine Positionsschätzverarbeitung zum Schätzen einer Drehposition des Rotors (210) auf der Grundlage der Lerndaten ausführt, und
> eine Speichereinheit (42), die die Lerndaten speichert,
> wobei die Verarbeitungseinheit (41) als die Lernverarbeitung durchführt:

> > eine erste Verarbeitung zum Drehen des Magneten (10) zusammen mit dem Rotor (210),
> > eine zweite Verarbeitung zum Erfassen von N1 digitalen Signalen, die Niveaus aufweisen, die jedes Mal, wenn sich der Magnet (10) um 180° dreht, invertiert werden, und eine erste Phasendifferenz zueinander aufweisen, mittels der N1 ersten Magnetsensoren (21, 22, 23),
> > eine dritte Verarbeitung zum Erfassen von N2 analogen Signalen, die elektrische Signale aufweisen, die entsprechend einer Magnetfeldstärke schwanken und eine zweite Phasendifferenz zueinander aufweisen, mittels der N2 zweiten Magnetsensoren (31, 32, 33), **gekennzeichnet durch**

eine vierte Verarbeitung zum Unterteilen einer Lernperiode in mehrere Quadranten, die digitale Werte von N1 Bits aufweisen, die verschieden voneinander sind, auf der Grundlage der in der Lernperiode erhaltenen N1 digitalen Signale, die mit einem Zyklus in Bezug auf einen mechanischen Winkel korrespondiert,

eine fünfte Verarbeitung zum Unterteilen, auf der Grundlage der in der Lernperiode erhaltenen N2 analogen Signale, der Lernperiode in P Polpaarbereiche, die mit Polpaarnummern assoziiert sind, die Polpaarpositionen der P Magnetpolpaare darstellen, wobei jeder der P Polpaarbereiche weiter in mehrere Abschnitte unterteilt wird und jeder der mehreren Abschnitte eine Segmentnummer zugeordnet wird, die die Drehposition darstellt, und

eine sechste Verarbeitung zum Speichern von Daten, die eine Korrespondenzbeziehung zwischen der Segmentnummer, die dem in einem jeweiligen der mehreren Quadranten enthaltenen Abschnitt zugeordnet ist, und der Polpaarnummer, die die Polpaarposition darstellt, angeben, in der Speichereinheit (42) als die Lerndaten, und

wobei die Verarbeitungseinheit (41) als die Positionsschätzverarbeitung durchführt:

eine siebte Verarbeitung zum Erfassen der N1 digitalen Signale mittels der N1 ersten Magnetsensoren (21, 22, 23),

eine achte Verarbeitung zum Erfassen der N2 analogen Signale mittels der N2 zweiten Magnetsensoren (31, 32, 33),

eine neunte Verarbeitung zum Spezifizieren eines aktuellen Quadranten aus den mehreren Quadranten auf der Grundlage der in der siebten Verarbeitung erfassten N1 digitalen Signale,

eine zehnte Verarbeitung zum Spezifizieren eines aktuellen Abschnitts aus den mehreren Abschnitten auf der Grundlage der in der achten Verarbeitung erfassten N2 analogen Signale, und

eine elfte Verarbeitung zum Ermitteln, als eine Anfangsposition des Rotors (210), einer Polpaarnummer, die mit einer Segmentnummer korrespondiert, die dem aktuellen Abschnitt zugeordnet ist, der in dem aktuellen Quadranten enthalten ist, auf der Grundlage der Lerndaten.

5. Positionsschätzvorrichtung (100, 110, 120) nach Anspruch 4, wobei in der fünften Verarbeitung der Lernverarbeitung die Verarbeitungseinheit (41) durchführt:

eine Verarbeitung zum Extrahieren eines Nulldurchgangspunkts, der ein Punkt ist, an dem die in jeweiligen der P Polpaarbereiche enthaltenen N2 analogen Signale einen Referenzwert schneiden,

eine Verarbeitung zum Extrahieren eines Schnittpunkts, der ein Punkt ist, an dem die in jeweiligen der P Polpaarbereiche enthaltenen N2 analogen Signale einander schneiden, und

eine Verarbeitung zum Ermitteln, als der Abschnitt, eines Intervalls zwischen dem Nulldurchgangspunkt und dem Schnittpunkt, die benachbart zueinander sind.

6. Positionsschätzvorrichtung (100, 110, 120) nach Anspruch 4 oder 5, wobei

die Verarbeitungseinheit (41) die Lernverarbeitung zumindest dann ausführt, wenn eine Leistung der Signalverarbeitungsvorrichtung (40) zum ersten Mal eingeschaltet wird, und

die Verarbeitungseinheit (41) die Positionsschätzverarbeitung ausführt, wenn die Leistung der Signalverarbeitungsvorrichtung (40) nach dem Ausführen der Lernverarbeitung wieder eingeschaltet wird.

7. Unbemanntes Transportfahrzeug (300), aufweisend:

einen Motor (200), der einen Rotor (210) aufweist, der P Magnetpolpaare aufweist, wobei P eine ganze Zahl größer oder gleich 2 ist; und

die Positionsschätzvorrichtung (100, 110, 120) nach einem der Ansprüche 4 bis 6, die eine Drehposition des Motors (200) schätzt.

8. Nähvorrichtung (400), aufweisend:

einen Motor (200), der einen Rotor (210) aufweist, der P Magnetpolpaare aufweist, wobei P eine ganze Zahl größer oder gleich 2 ist; und

die Positionsschätzvorrichtung (100, 110, 120) nach einem der Ansprüche 4 bis 6, die eine Drehposition des Motors (200) schätzt.

**Revendications**

1. Procédé d'estimation de position pour estimer une position de rotation d'un moteur (200) comportant un rotor (210) ayant P paires de pôles magnétiques, dans lequel P est un nombre entier de 2 ou plus, le procédé d'estimation de position comprenant :

   une étape d'apprentissage consistant à acquérir les données d'apprentissage nécessaires à l'estimation de la position de rotation ; et
   une étape d'estimation de position consistant à estimer la position de rotation du rotor (210) sur la base des données d'apprentissage, dans lequel
   l'étape d'apprentissage comporte

   une première étape consistant à faire tourner, conjointement avec le rotor (210), un aimant (10) ayant une paire de pôles magnétiques et partageant un axe de rotation avec le rotor (210),
   une deuxième étape consistant à acquérir N1 signaux numériques ayant des niveaux inversés chaque fois que l'aimant (10) tourne de 180° et ayant une première différence de phase les uns par rapport aux autres, en utilisant N1 premiers capteurs magnétiques (21, 22, 23) opposés à l'aimant (10) et disposés le long d'une direction de rotation de l'aimant (10), dans lequel N1 est un nombre entier de 3 ou plus,
   une troisième étape consistant à acquérir N2 signaux analogiques ayant des signaux électriques qui fluctuent en fonction de l'intensité du champ magnétique et ayant une deuxième différence de phase les uns par rapport aux autres, en utilisant N2 deuxièmes capteurs magnétiques (31, 32, 33) opposés au rotor (210) et disposés le long d'une direction de rotation du rotor (210), dans lequel N2 est un nombre entier de 3 ou plus, **caractérisé par**
   une quatrième étape consistant à diviser une période d'apprentissage en une pluralité de quadrants ayant des valeurs numériques de N1 bits différentes les unes des autres sur la base des N1 signaux numériques obtenus au cours de la période d'apprentissage correspondant à un cycle en termes d'angle mécanique,
   une cinquième étape consistant à, sur la base des N2 signaux analogiques obtenus au cours de la période d'apprentissage, diviser la période d'apprentissage en régions de P paires de pôles associées à des numéros de paires de pôles représentant les positions de paire de pôle des P paires de pôles magnétiques, en outre à diviser chacune des régions de P paires de pôles en une pluralité de sections, et à associer un numéro de segment représentant la position de rotation à chacune de la pluralité de sections, et
   une sixième étape consistant à acquérir, en tant que données d'apprentissage, les données indiquant une relation de correspondance entre le numéro de segment associé à la section incluse dans chacun de la pluralité de quadrants et le numéro de paire de pôles indiquant la position de paire de pôles, et

   l'étape d'estimation de position comporte

   une septième étape consistant à acquérir les N1 signaux numériques en utilisant les N1 premiers capteurs magnétiques (21, 22, 23),
   une huitième étape consistant à acquérir les N2 signaux analogiques en utilisant les N2 deuxièmes capteurs magnétiques (31, 32, 33),
   une neuvième étape consistant à spécifier un quadrant courant parmi la pluralité de quadrants sur la base des N1 signaux numériques acquis lors de la septième étape,
   une dixième étape consistant à spécifier une section courante parmi la pluralité de sections sur la base des N2 signaux analogiques acquis au cours de la huitième étape, et
   une onzième étape consistant à déterminer, en tant que position initiale du rotor (210), un numéro de paire de pôles correspondant à un numéro de segment associé à la section courante incluse dans le quadrant courant sur la base des données d'apprentissage.

2. Procédé d'estimation de position selon la revendication 1, dans lequel la cinquième étape de l'étape d'apprentissage comporte

   une étape consistant à extraire un point de croisement zéro qui est un point auquel les N2 signaux analogiques inclus dans chacune des régions de P paires de pôles coupent une valeur de référence,
   une étape consistant à extraire un point d'intersection qui est un point auquel les N2 signaux analogiques inclus dans chacune des régions de P paires de pôles se coupent, et
   une étape consistant à déterminer, en tant que section, un intervalle entre le point de croisement zéro et le point d'intersection adjacents l'un à l'autre.

**3.** Procédé d'estimation de position selon la revendication 1 ou 2, dans lequel

l'étape d'apprentissage est réalisée lorsque l'alimentation d'un dispositif de traitement de signaux (40) qui exécute le traitement selon au moins l'étape d'apprentissage et l'étape d'estimation de position est activée pour la première fois, et

l'étape d'estimation de position est réalisée lorsque l'alimentation du dispositif de traitement des signaux (40) est réactivée après l'exécution de l'étape d'apprentissage.

**4.** Dispositif d'estimation de position (100, 110, 120) qui estime une position de rotation d'un moteur (200) comportant un rotor (210) ayant P paires de pôles magnétiques, dans lequel P est un nombre entier de 2 ou plus, le dispositif d'estimation de position (100, 110, 120) comprenant :

un aimant (10) ayant une paire de pôles magnétiques et partageant un axe de rotation avec le rotor (210) ;
N1 premiers capteurs magnétiques (21, 22, 23) opposés à l'aimant (10) et disposés le long d'une direction de rotation de l'aimant (10), dans lequel N1 est un nombre entier de 3 ou plus ;
N2 deuxièmes capteurs magnétiques (31, 32, 33) opposés au rotor (210) et disposés le long d'une direction de rotation du rotor (210), dans lequel N2 est un nombre entier de 3 ou plus ; et
un dispositif de traitement de signaux (40) qui traite les signaux de sortie du premier capteur magnétique (21, 22, 23) et du deuxième capteur magnétique (31, 32, 33), dans lequel
le dispositif de traitement de signaux (40) comporte

une unité de traitement (41) qui exécute un traitement d'apprentissage consistant à acquérir les données d'apprentissage nécessaires à l'estimation de la position de rotation et un traitement d'estimation de position consistant à estimer une position de rotation du rotor (210) sur la base des données d'apprentissage, et
une unité de stockage (42) qui stocke les données d'apprentissage,

l'unité de traitement (41) exécute, en tant que traitement d'apprentissage,

un premier traitement consistant à faire tourner l'aimant (10) conjointement avec le rotor (210),
un deuxième traitement consistant à acquérir N1 signaux numériques ayant des niveaux inversés à chaque fois que l'aimant (10) tourne de 180° et ayant une première différence de phase entre eux, via les N1 premiers capteurs magnétiques (21, 22, 23),
un troisième traitement consistant à acquérir N2 signaux analogiques ayant des signaux électriques qui fluctuent en fonction de l'intensité du champ magnétique et ayant une deuxième différence de phase entre eux, via les N2 deuxièmes capteurs magnétiques (31, 32, 33), **caractérisé par**
un quatrième traitement consistant à diviser une période d'apprentissage en une pluralité de quadrants ayant des valeurs numériques de N1 bits différentes les unes des autres sur la base des N1 signaux numériques obtenus au cours de la période d'apprentissage correspondant à un cycle en termes d'angle mécanique,
un cinquième traitement consistant, sur la base des N2 signaux analogiques obtenus au cours de la période d'apprentissage, à diviser la période d'apprentissage en régions de P paires de pôles associées à des numéros de paires de pôles représentant les positions de paires de pôles des P paires de pôles magnétiques, à diviser en outre chacune des régions de P paires de pôles en une pluralité de sections et à associer un numéro de segment représentant la position de rotation à chacune de la pluralité de sections, et
un sixième traitement consistant à stocker, dans l'unité de stockage (42), en tant que données d'apprentissage, les données indiquant une relation de correspondance entre le numéro de segment associé à la section incluse dans chacun de la pluralité de quadrants et le numéro de paire de pôles représentant la position de paire de pôles, et

l'unité de traitement (41) exécute, en tant que traitement d'estimation de position,

un septième traitement consistant à acquérir les N1 signaux numériques via les N1 premiers capteurs magnétiques (21, 22, 23),
un huitième traitement consistant à acquérir les N2 signaux analogiques via les N2 deuxièmes capteurs magnétiques (31, 32, 33),
un neuvième traitement consistant à spécifier un quadrant courant parmi la pluralité de quadrants sur la base des N1 signaux numériques acquis au cours du septième traitement,
un dixième traitement consistant à spécifier une section courante parmi la pluralité de sections sur la base des N2 signaux analogiques acquis au cours du huitième traitement, et

un onzième traitement consistant à déterminer, en tant que position initiale du rotor (210), un numéro de paire de pôles correspondant à un numéro de segment associé à la section courante incluse dans le quadrant courant sur la base des données d'apprentissage.

5. Dispositif d'estimation de position (100, 110, 120) selon la revendication 4, dans lequel
au cours du cinquième traitement du traitement d'apprentissage, l'unité de traitement (41) exécute

un traitement consistant à extraire un point de croisement zéro qui est un point auquel les N2 signaux analogiques inclus dans chacune des régions de la P paire de pôles coupent une valeur de référence,
un traitement consistant à extraire un point d'intersection qui est un point auquel les N2 signaux analogiques inclus dans chacune des régions de P paires de pôles se coupent, et
un traitement consistant à déterminer, en tant que section, un intervalle entre le point de croisement zéro et le point d'intersection adjacents l'un à l'autre.

6. Dispositif d'estimation de position (100, 110, 120) selon la revendication 4 ou 5, dans lequel

l'unité de traitement (41) exécute le traitement d'apprentissage au moins lorsque l'alimentation du dispositif de traitement de signaux (40) est activée pour la première fois, et
l'unité de traitement (41) exécute le traitement d'estimation de position lorsque l'alimentation du dispositif de traitement de signaux (40) est réactivée après l'exécution du traitement d'apprentissage.

7. Véhicule de transport sans pilote (300), comprenant :

un moteur (200) comportant un rotor (210) ayant P paires de pôles magnétiques, dans lequel P est un nombre entier de 2 ou plus ; et
le dispositif d'estimation de position (100, 110, 120) selon l'une quelconque des revendications 4 à 6 qui estime une position de rotation du moteur (200).

8. Dispositif de couture (400), comprenant :

un moteur (200) comportant un rotor (210) ayant P paires de pôles magnétiques, dans lequel P est un nombre entier de 2 ou plus ; et
le dispositif d'estimation de position (100, 110, 120) selon l'une quelconque des revendications 4 à 6 qui estime une position de rotation du moteur (200).

Fig. 1

Fig. 2

```
                        ┌──────────────┐
                        │    START     │
                        └──────┬───────┘
                               │
                               ▼                    ⌒S1
        ┌──────────────────────────────────────────────┐
        │              ROTATE MOTOR                      │
        └──────────────────────┬─────────────────────────┘
                               │
                               ▼                    ⌒S2
        ┌──────────────────────────────────────────────┐
        │   ACQUIRE DIGITAL SIGNALS HA1, HA2, AND HA3    │
        └──────────────────────┬─────────────────────────┘
                               │
                               ▼                    ⌒S3
        ┌──────────────────────────────────────────────┐
        │    ACQUIRE ANALOG SIGNALS Hu, Hv, AND Hw       │
        └──────────────────────┬─────────────────────────┘
                               │
                               ▼                    ⌒S4
        ┌──────────────────────────────────────────────┐
        │   DIVIDE ONE CYCLE IN MECHANICAL ANGLE          │
        │ INTO PLURALITY OF QUADRANTS ON THE BASIS        │
        │    OF DIGITAL SIGNALS HA1, HA2, AND HA3         │
        └──────────────────────┬─────────────────────────┘
                               │
                               ▼                    ⌒S5
        ┌──────────────────────────────────────────────┐
        │  OBTAIN CORRESPONDENCE RELATIONSHIP             │
        │  AMONG SECTION, SEGMENT NUMBER, AND             │
        │   POLE PAIR NUMBER ON THE BASIS OF             │
        │     ANALOG SIGNALS Hu, Hv, AND Hw              │
        └──────────────────────┬─────────────────────────┘
                               │
                               ▼                    ⌒S6
        ┌──────────────────────────────────────────────┐
        │            ACQUIRE LEARNING DATA               │
        └──────────────────────┬─────────────────────────┘
                               │
                               ▼
                        ┌──────────────┐
                        │     END      │
                        └──────────────┘
```

Fig. 3

Fig. 4

ONE CYCLE IN ELECTRICAL ANGLE

| | Hu |
| | Hv |
| | Hw |

EP 4 270 770 B1

# Fig. 5

```
              ┌─────────────┐
              │    START    │
              └──────┬──────┘
                     │              ～S7
      ┌──────────────▼──────────────────┐
      │ ACQUIRE DIGITAL SIGNALS HA1, HA2, AND HA3 │
      └──────────────┬──────────────────┘
                     │              ～S8
      ┌──────────────▼──────────────────┐
      │  ACQUIRE ANALOG SIGNALS Hu, Hv, AND Hw  │
      └──────────────┬──────────────────┘
                     │              ～S9
      ┌──────────────▼──────────────────┐
      │  SPECIFY CURRENT QUADRANT ON THE BASIS │
      │   OF DIGITAL SIGNALS HA1, HA2, AND HA3  │
      └──────────────┬──────────────────┘
                     │              ～S10
      ┌──────────────▼──────────────────┐
      │ SPECIFY CURRENT SECTION ON THE BASIS OF │
      │   ANALOG SIGNALS Hu, Hv, AND Hw  │
      └──────────────┬──────────────────┘
                     │              ～S11
      ┌──────────────▼──────────────────┐
      │ DETERMINE INITIAL POSITION OF ROTOR ON │
      │    THE BASIS OF CURRENT QUADRANT,      │
      │ CURRENT SECTION, AND LEARNING DATA     │
      └──────────────┬──────────────────┘
                     │
              ┌──────▼──────┐
              │     END     │
              └─────────────┘
```

Fig. 6

Fig. 7

# Fig. 8

```
                    ┌─────────────┐
                    │    START    │
                    └──────┬──────┘
                           │              ⌒S21
                    ┌──────▼──────────────────┐
                    │      ROTATE MOTOR        │
                    └──────┬──────────────────┘
                           │              ⌒S22
                    ┌──────▼──────────────────┐
                    │ ACQUIRE ANALOG SIGNALS HB1 AND HB2 │
                    └──────┬──────────────────┘
                           │              ⌒S23
                    ┌──────▼──────────────────┐
                    │ ACQUIRE ANALOG SIGNALS Hu, Hv, AND Hw │
                    └──────┬──────────────────┘
                           │              ⌒S24
                    ┌──────▼──────────────────┐
                    │ CALCULATE MECHANICAL ANGLE TIME SERIES │
                    │ DATA IN ONE CYCLE IN MECHANICAL ANGLE ON │
                    │ THE BASIS OF ANALOG SIGNALS HB1 AND HB2 │
                    └──────┬──────────────────┘
                           │              ⌒S25
                    ┌──────▼──────────────────┐
                    │ OBTAIN CORRESPONDENCE RELATIONSHIP │
                    │ AMONG SECTION, SEGMENT NUMBER, AND │
                    │ POLE PAIR NUMBER ON THE BASIS OF │
                    │ ANALOG SIGNALS Hu, Hv, AND Hw │
                    └──────┬──────────────────┘
                           │              ⌒S26
                    ┌──────▼──────────────────┐
                    │    ACQUIRE LEARNING DATA  │
                    └──────┬──────────────────┘
                           │
                    ┌──────▼──────┐
                    │     END     │
                    └─────────────┘
```

31

Fig. 9

Fig. 10

```
                    ┌─────────────┐
                    │    START    │
                    └──────┬──────┘
                           │              S27
         ┌─────────────────▼──────────────────┐
         │   ACQUIRE ANALOG SIGNALS HB1 AND HB2 │
         └─────────────────┬──────────────────┘
                           │              S28
         ┌─────────────────▼──────────────────┐
         │  CALCULATE CURRENT VALUE OF MECHANICAL │
         │   ANGLE ON THE BASIS OF ANALOG SIGNALS │
         │             HB1 AND HB2             │
         └─────────────────┬──────────────────┘
                           │              S29
         ┌─────────────────▼──────────────────┐
         │  DETERMINE INITIAL POSITION OF ROTOR ON │
         │     THE BASIS OF CURRENT VALUE OF    │
         │   MECHANICAL ANGLE AND LEARNING DATA │
         └─────────────────┬──────────────────┘
                           │
                    ┌──────▼──────┐
                    │     END     │
                    └─────────────┘
```

Fig. 11

EP 4 270 770 B1

# Fig. 12

```
                    ┌─────────────┐
                    │    START    │
                    └─────────────┘
                           │
                           ▼              ╭─S41
        ┌────────────────────────────────────────┐
        │             ROTATE MOTOR                │
        └────────────────────────────────────────┘
                           │
                           ▼              ╭─S42
        ┌────────────────────────────────────────┐
        │  ACQUIRE ANALOG SIGNALS HC1, HC2, AND HC3 │
        └────────────────────────────────────────┘
                           │
                           ▼              ╭─S43
        ┌────────────────────────────────────────┐
        │   ACQUIRE ANALOG SIGNALS Hu, Hv, AND Hw  │
        └────────────────────────────────────────┘
                           │
                           ▼              ╭─S44
        ┌────────────────────────────────────────┐
        │ DIVIDE ONE CYCLE IN MECHANICAL ANGLE INTO │
        │ PLURALITY OF QUADRANTS ON THE BASIS OF    │
        │    ANALOG SIGNALS HC1, HC2, AND HC3       │
        └────────────────────────────────────────┘
                           │
                           ▼              ╭─S45
        ┌────────────────────────────────────────┐
        │   OBTAIN CORRESPONDENCE RELATIONSHIP     │
        │   AMONG SECTION, SEGMENT NUMBER, AND     │
        │    POLE PAIR NUMBER ON THE BASIS OF      │
        │      ANALOG SIGNALS Hu, Hv, AND Hw       │
        └────────────────────────────────────────┘
                           │
                           ▼              ╭─S46
        ┌────────────────────────────────────────┐
        │          ACQUIRE LEARNING DATA          │
        └────────────────────────────────────────┘
                           │
                           ▼
                    ┌─────────────┐
                    │     END     │
                    └─────────────┘
```

Fig. 13

# Fig. 14

```
          ( START )
              │
              ▼              ⌐S47
┌─────────────────────────────────┐
│ ACQUIRE ANALOG SIGNALS HC1, HC2, AND HC3 │
└─────────────────────────────────┘
              │
              ▼              ⌐S48
┌─────────────────────────────────┐
│ ACQUIRE ANALOG SIGNALS Hu, Hv, AND Hw │
└─────────────────────────────────┘
              │
              ▼              ⌐S49
┌─────────────────────────────────┐
│ SPECIFY CURRENT QUADRANT ON THE BASIS │
│ OF ANALOG SIGNALS HC1, HC2, AND HC3 │
└─────────────────────────────────┘
              │
              ▼              ⌐S50
┌─────────────────────────────────┐
│ SPECIFY CURRENT SECTION ON THE BASIS OF │
│ ANALOG SIGNALS Hu, Hv, AND Hw │
└─────────────────────────────────┘
              │
              ▼              ⌐S51
┌─────────────────────────────────┐
│ DETERMINE INITIAL POSITION OF ROTOR ON │
│ THE BASIS OF CURRENT QUADRANT, │
│ CURRENT SECTION, AND LEARNING DATA │
└─────────────────────────────────┘
              │
              ▼
           ( END )
```

Fig. 15

Fig. 16

Fig. 17

Fig. 18

400

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016116304 A1
- US 2020232822 A1

- JP 6233532 B